(19) Europäisches Patentamt / European Patent Office / Office européen des brevets

(11) EP 2 744 839 B1

(12) **EUROPÄISCHE PATENTSCHRIFT**

(45) Veröffentlichungstag und Bekanntmachung des Hinweises auf die Patenterteilung:
**24.02.2016 Patentblatt 2016/08**

(21) Anmeldenummer: **12753680.3**

(22) Anmeldetag: **15.08.2012**

(51) Int Cl.:
***C08G 18/09*** *(2006.01)* ***C08G 18/40*** *(2006.01)*
***C08G 18/42*** *(2006.01)* ***C08G 18/48*** *(2006.01)*

(86) Internationale Anmeldenummer:
**PCT/EP2012/065923**

(87) Internationale Veröffentlichungsnummer:
**WO 2013/024107 (21.02.2013 Gazette 2013/08)**

(54) **VERFAHREN ZUR HERSTELLUNG EINES POLYURETHAN-POLYISOCYANURAT-HARTSCHAUMS**

METHOD FOR MANUFACTURING A POLYURETHANE POLYISOCYANURATE RIGID FOAM

PROCÉDÉ DE FABRICATION D'UNE MOUSSE RIGIDE DE POLYURÉTHANE-POLYISOCYANURATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **16.08.2011 EP 11306047**

(43) Veröffentlichungstag der Anmeldung:
**25.06.2014 Patentblatt 2014/26**

(73) Patentinhaber: **Covestro Deutschland AG**
**51373 Leverkusen (DE)**

(72) Erfinder:
- **NEFZGER, Hartmut**
  **50259 Pulheim (DE)**
- **HOFMANN, Jörg**
  **47800 Krefeld (DE)**
- **LORENZ, Klaus**
  **41539 Dormagen (DE)**
- **VOGEL, Stephanie**
  **40764 Langenfeld (DE)**
- **ALBERS, Reinhard**
  **51375 Leverkusen (DE)**
- **KLASEN, Patrick**
  **52391 Vettweiß (DE)**

(74) Vertreter: **Levpat**
**c/o Covestro AG**
**Alfred-Nobel-Straße 10**
**40789 Monheim am Rhein (DE)**

(56) Entgegenhaltungen:
**EP-A2- 1 852 448** **WO-A1-2011/000546**
**WO-A1-2011/137011**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 744 839 B1

## Beschreibung

Gegenstand der Erfindung ist ein Verfahren zur Herstellung von Polyurethan-Polyisocyanurat-Hartschaumstoffen unter Verwendung von Polyolen mit hohem Anteil an sekundären Hydroxylendgruppen. Die Erfindung betrifft ferner die so erhältlichen Polyurethan-Polyisocyanurat-Hartschaumstoffe sowie deren Verwendung in der Herstellung von Verbundelementen aus den Polyurethan-Polyisocyanurat-Hartschaumstoffen und geeigneten Deckschichten. Ein weiterer Gegenstand der Erfindung sind die so erhältlichen Verbundelemente.

Polymethan-Polyisocyanurat-(PUR-PIR)Hartschaumstoffe werden typischerweise unter Verwendung zumindest eines Katalysators durch Umsetzung einer Polyol- mit einer Isocyanatkomponente in Gegenwart eines Treibmittels hergestellt. Weiterhin können auch Additive wie Schaumstabilisatoren und Flammschutzmittel zugesetzt werden. PUR-PIR-Hartschaumstoffe verfügen verglichen mit anderen Hartschaumstoffen wie beispielsweise PUR-Hartschaumstoffen über eine exzellente thermische Stabilität und verbesserte Brandeigenschaften. Die Ursache dieser verbesserten Eigenschaften wird Isocyanurat-Strukturelementen zugeschrieben.

Als Katalysatoren kommen häufig Carboxylat-Salze wie etwa Alkalimetall-Carboxylate zum Einsatz. Deren Verwendung führt jedoch oft zu Verarbeitungsproblemen, die sowohl in kontinuierlich arbeitenden Verschäumungsanlagen als auch bei diskontinuierlichen Verfahren zu großen Schwierigkeiten führen können. Diese Verarbeitungsprobleme sind letztlich darauf zurückzuführen, dass die Bildung der Urethangruppen bei geringer Temperatur startet als die Bildung der Isocyanuratgruppen. Wenn die Urethanisierungsreaktion beginnt, erwärmt sich das Reaktionsgemisch infolge der Exothermie der Reaktion. Bei Erreichen einer bestimmten Temperatur, in der Regel in der Größenordnung ab 60 °C, setzt die Trimerisierungsreaktion (Bildung der Isocyanuratgruppen) ein. Man sieht in solchen Fällen in einer Auftragung der Steighöhe des Schaums über der Zeit ein bimodales ("stufiges") Reaktionsprofil, d. h. die Steiggeschwindigkeit durchläuft *zwei* Maxima: Beim ersten Maximum setzt die Urethanisierungsreaktion, beim zweiten Maximum die Trimerisierungsreaktion ein. Dies bedeutet, dass der Schaum während des Aufschäumvorganges letztlich mit zwei unterschiedlichen Geschwindigkeiten expandiert. Dies kann zu Eigenschaftsverschlechterungen führen. PUR-PIR-Hartschaumstoffe werden in der Regel auf feste Träger, z. B. metallische Deckschichten, aufgebracht. Bei diesem Vorgang kann ein bimodales Reaktionsprofil dazu führen, dass der Verbund von Schaum und Trägermaterial stark gestört wird, was teilweise bis hin zum Abriss des Schaums vom Träger führen kann. Im Fall von geschäumten Formteilen aus PUR-PIR-Hartschaumstoff kann ein solches bimodales Reaktions- und Steigprofil zu Überwälzungen des fließenden Schaums am Fließwegende führen, was Lunkerbildung und Lufteinschlüsse verursacht. Beides sind unerwünschte Effekte, die sich negativ auf die Eigenschaften des geschäumten Formteils, wie die des geschäumten Formteils, wie die Isolationswirkung, die Haftung zwischen Schaum und Träger sowie die optische Oberflächenqualität (z .B. bei Metallverbundelementen), auswirken.

Zur Lösung dieses Problems schlägt EP 1 878 493 A1 die Verwendung spezieller carbanionischer Katalysatoren vor. Diese carbanionischen Katalysatoren lassen sich durch die allgemeine Formel

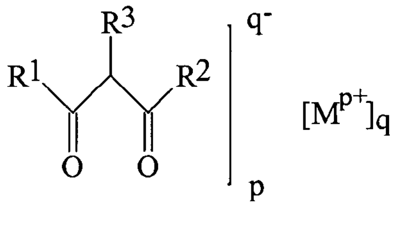

beschreiben, wobei die Reste $R^1$ bis $R^3$, M, p und q die in Absatz [0006] der Schrift genannte Bedeutung haben. Es handelt sich also um Katalysatoren mit einer Acetylacetonato-Carbanioneneinheit. Nachteilig bei diesem Verfahren ist der im Vergleich zu den sonst im Stand der Technik üblichen Katalysatoren hohe Preis der carbanionischen Katalysatoren sowie deren eingeschränkte kommerzielle Verfügbarkeit.

Es bestand daher ein Bedarf an einem Verfahren zur Herstellung von PUR-PIR-Hartschaumstoffen, bei dem auf einfache Weise ohne Verwendung spezieller, teurer Katalysatoren ein möglichst einheitliches Reaktionsprofil gewährleistet werden kann, damit die oben genannten Nachteile eines bimodalen Reaktionsprofils so weit wie möglich vermieden werden.

Diesem Bedarf Rechnung tragend ist Gegenstand der vorliegenden Erfindung ein Verfahren zur Herstellung von PUR-PIR-Hartschaumstoffen durch Verschäumen einer Polyolkomponente umfassend Polyesterpolyole mit sekundären Hydroxyl-Endgruppen in einem Anteil von bevorzugt mindestens 50 %, bezogen auf alle vorhandenen Hydroxyl-Endgruppen, mit einer Isocyanatkomponente in Gegenwart eines Treibmittels und eines Katalysators, wobei carbanionische Katalysatoren ausgeschlossen sind. Die so erhältlichen PUR-PIR-Hartschaumstoffe sind ebenfalls Gegenstände der vorliegenden Erfindung. Insbesondere ist Gegenstand der vorliegenden Erfindung ein Verfahren, bei dem die Verschäumung gegen wenigstens eine Deckschicht stattfindet, sodass ein Verbundelement, umfassend wenigstens eine

Deckschicht und den PUR-PIR-Hartschaumstoff, erhalten wird. Ferner sind Verbundelemente, erhältlich nach dem erfindungsgemäßen Verfahren, Gegenstand der vorliegenden Erfindung. Das erfindungsgemäße Verfahren zeichnet sich durch ein weitgehend monomodales Reaktionsprofil bei der Verschäumung aus, sodass PUR-PIR-Hartschaumstoffe und Verbundelemente erhalten werden, welche weitgehend frei von den oben genannten Nachteilen (schlechte Haftung des Schaums auf der Deckschicht, verringerte Isolationswirkung, verringerte Oberflächengüte u. a. m.) sind.

Erfindungsgemäß werden die Polyesterpolyole mit sekundären Hydroxyl-Endgruppen durch Addition von Epoxiden der allgemeinen Formel (1),

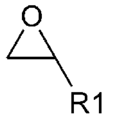

(1)

,

worin $R^1$ für einen Alkylrest oder einen Arylrest steht, an "saure" Polyester, d. h. Polyester mit Carboxyl-Endgruppen, hergestellt. Ein solches Verfahren zur Herstellung von Polyesterpolyolen mit sekundären Hydroxyl-Endgruppen wird in der Patentanmeldung WO 2010/127 823 A2 detailliert beschrieben. Die Anmeldung erwähnt ferner die Anwendung solcher Polyole in der Herstellung von Polyurethanpolymeren, ohne jedoch auf Details wie beispielsweise die Zusammensetzung des Polymers oder geeignete Anwendungsgebiete einzugehen.

WO 2011/000 546 A1 befasst sich wesentlich detaillierter als WO 2010/127 823 A2 mit der Verwendung von Polyesterpolyolen mit sekundären Hydroxyl-Endgruppen erhalten durch Addition von Epoxiden an "saure" Polyester in der Herstellung von Polyurethanpolymeren, wobei der Schwerpunkt auf Polyurethan-(PUR-)Weichschaumstoffen liegt. Die Polyisocyanuratreaktion und ihre Besonderheiten (siehe die Erläuterung weiter oben zum bimodalen Reaktionsprofil) werden in dieser Schrift nicht diskutiert. Wie dem Fachmann bekannt ist, gibt es grundsätzliche Unterschiede zwischen der Herstellung eines PUR-Weichschaumstoffs und der Herstellung eines PUR-PIR-Hartschaumstoffs. Neben der bereits erwähnten Problematik des bimodalen Reaktionsprofils, die in der Herstellung eines PUR-Weichschaumstoffes so nicht auftritt, sind noch weitere Unterschiede von Bedeutung. So sind Hartschäume aufgrund der üblichen Anforderungsprofile (z. B. als Isoliermaterial oder Teil eines Konstruktionselements im Bauwesen) im Gegensatz zu Weichschäumen überwiegend bis vollständig geschlossenzellig. Die Anforderungen an Weichschäume sind aufgrund des grundsätzlich anderen Anwendungsgebiets (im Komfort-Bereich, etwa für Sitzmöbel oder Matratzen) völlig andere. Die speziellen Anforderungen an Hartschäume erfordern in der Regel den Einsatz eines physikalischen Treibmittels, wohingegen Weichschäume überwiegend oder sogar vollständig mit Wasser als chemischem Treibmittel hergestellt werden. In der Herstellung von Hartschäumen eingesetzte Polyole haben im Allgemeinen eine kürzere Kettenlänge als solche in der Herstellung von Weichschäumen eingesetzte. Bereits diese unvollständige Aufzählung von Unterschieden macht deutlich, dass die verfahrenstechnischen und chemischen Aspekte, die in jeweils einem der genannten Gebiete Hart- oder Weichschaum gelten, nicht ohne Weiteres auf das jeweils andere Gebiet übertragen werden können.

Polyole mit sekundären Hydroxyl-Endgruppen als Reaktionspartner für Iscocyanate werden ferner in folgenden Schriften diskutiert:

GB 1,108,013 offenbart die Verwendung eines Hydroxylgruppen-haltigen Polyesters in der Herstellung von Polyurethanschäumen (vgl. Anspruch 1). Die Herstellung von PUR-PIR-Schäumen wird in GB 1,108,013 nicht offenbart. Der Hydroxylgruppen-haltige Polyester wird erhalten durch Reaktion von Phthalsäureanhydrid oder einem substituierten Phthalsäureanhydrid mit einem Polyol enthaltend mindestens drei Hydroxylgruppen und einem Epoxid. In Beispiel 1 wird Propylenoxid genannt. Die auf diese Weise gewonnenen Hydroxylgruppen-haltigen Polyester enthalten somit überwiegend (bevorzugt mindestens 80 %, vgl. Anspruch 2) bis vollständig Phthalsäure-Einheiten (ggf. substituierte Phthalsäureeinheiten) als Esterbestandteile. Eine weitere Konsequenz des in GB 1,108,013 beschriebenen Herstellverfahrens des Hydroxylgruppen-haltigen Polyesters besteht darin, dass die durch Öffnung von Propylenoxid erhalten Bausteine (also $-O-CH_2-CH(O-)-CH_3$) nicht nur am Kettenende (wo sie zur Bildung von sekundären Hydroxyl-Endgruppen führen) auftreten, sondern auch im Kern des Polyesters, d. h. der Polyester enthält zwangsläufig kurze Alkylseitengruppen. Die Eigenschaften der aus derartigen Polyestern hergestellten Polyurethane sind als Folge der zahlreichen kurzen Alkylseitengruppen gegenüber solchen Polyurethanen, die aus unverzweigten $\alpha,\omega$-Diolen erhalten werden, oft nachteilig verändert. Zu nennen ist insbesondere die erhöhte Viskosität, die sich auf molekularer Ebene aus der eingeschränkten freien Drehbarkeit infolge des Vorhandenseins der Alkylseitengruppen verglichen mit praktisch freier Drehbarkeit bei Abwesenheit von Alkylseitengruppen ergibt. Eine erhöhte Viskosität stellt immer einen verarbeitungstechnischen Nachteil dar, und zwar nicht nur in logistischer Hinsicht, sondern auch beim Schäumvorgang an sich, insbesondere wenn es gilt, komplizierte Formen mit Hinterschnitten oder auch große Formen mit langen Fließwegen zu füllen.

US 4,647,595 offenbart ein Verfahren zur Herstellung Urethan-modifizierter Polyisocyanurat-(PIR-)Schäume (vgl. Anspruch 1). Hierzu wird eine Polyolkomponente eingesetzt, die ein Polyester-Ether-Polyol umfasst. Das Polyester-Ether-Polyol wird durch Reaktion eines aromatischen Carbonsäureanhydrids mit einem Epoxid und einer Alkoholkomponente hergestellt. Die in US 4,647,595 offenbarten Reaktionsbedingungen sind derart, dass die zuvor beschriebene Problematik im Zusammenhang mit dem Vorhandensein zahlreicher kurzkettiger Alkylseitengruppen auch hier zum Tragen kommt.

EP 0 086 309 A1 befasst sich mit Beschichtungszusammensetzungen, in deren Herstellung Polyhydroxyoligomere eingesetzt werden. Die Beschichtungszusammensetzungen finden Anwendung als Automobil-Decklacke (vgl. Zusammenfassung). Die Polyhydroxyoligomere werden erhalten durch Umsetzung eines sauren Esters mit einem Epoxid, wobei der saure Ester seinerseits hergestellt wird durch Umsetzung eines aliphatischen verzweigten $C_3$-$C_{10}$-Diols mit einem Alkylhexahydrophthalsäureanhydrid im stöchometrischen Überschuss des Anhydrids (vgl. Anspruch 1). Wenn als Epoxid Propylenoxid eingesetzt wird (wie in Beispiel 10 offenbart), wird demnach ein Polyhydroxyoligomer mit sekundären Hydroxyl-Endgruppen erhalten. Die Beschichtungszusammensetzung umfasst ein solches Polyhydroxyoligomer, ein Vernetzungsmittel und einen hydroxyfunktionellen Zusatz (vgl. Anspruch 11). Als Vernetzungsmittel kann ein Polyisocyanat eingesetzt werden (vgl. Anspruch 14). Die Verwendung von Polyesterpolyolen mit sekundären Hydroxyl-Endgruppen in der Herstellung von PUR-PIR-Hartschaumstoffen wird in EP 0 086 309 A1 nicht offenbart. Schaumstoffe sind auch gar nicht Gegenstand dieser Schrift, sondern als Lacke einsetzbare Beschichtungen.

Keines der vorstehend genannten Dokumente des Standes der Technik befasst sich also mit dem Einsatz von Polyesterpolyolen mit sekundären Hydroxyl-Endgruppen in der Herstellung von PUR-PIR-Hartschaumstoffen unter Vermeidung eines bimodalen Reaktionsprofils. Die vorliegende Erfindung, die nachstehend detailliert erläutert wird, bietet einen einfachen Weg, die eingangs geschilderten Probleme im Zusammenhang mit uneinheitlichen Reaktionsprofilen bei der Herstellung von PUR-PIR-Hartschaumstoffen effizient zu verringern.

Die Erfindung betrifft ein Verfahren zur Herstellung eines Polyurethan Polyisocyanurat-Hartschaums **C** umfassend die Schritte

(I) Umsetzung eines Carboxyl-Endgruppen umfassenden Polyesters mit einem Epoxid der allgemeinen Formel (1),

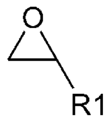

(1)
,

worin $R^1$ für einen Alkylrest oder einen Arylrest steht,
unter Einhaltung eines molaren Verhältnisses von Epoxidgruppen zu Carboxyl-Endgruppen zwischen 0,8 : 1 und 50 : 1, bevorzugt zwischen 1 : 1 und 20 : 1, besonders bevorzugt zwischen 1,05 : 1 und 5 : 1, sodass ein Polyesterpolyol mit sekundären Hydroxyl-Endgruppen **A1a,** welches eine Funktionalität von 1,8 bis 6,5, bevorzugt 1,8 bis 3,0, und eine Hydroxylzahl von 15 mg KOH/g bis 500 mg KOH/g, bevorzugt 100 bis 350, besonders bevorzugt 150 bis 350, aufweist, erhalten wird;

(II) Verschäumung bei Kennzahlen von 180 bis 400, bevorzugt von 200 bis 380, besonders bevorzugt von 220 bis 360,

(i) einer Polyolkomponente **A1** umfassend **A1a**
mit

(ii) einer Isocyanatkomponente **B** umfassend

a) wenigstens ein Isocyanat **B1** ausgewählt aus der Gruppe bestehend aus:

Toluylendiisocyanat (TDI), Diphenylmethandiisocyanat (MDI), Xylylendiisocyanat, Naphthylendiisocyanat, Hexamethylendiisocyanat, Diisocyanatodicyclohexylmethan und Isophorondiisocyanat, bevorzugt Diphenylmethandiisocyanat (MDI) und Polyphenylenpolymethylenpolyisocyanat (PMDI), oder

b) ein Isocyanat-terminiertes Prepolymer **B2** hergestellt aus wenigstens einem Polyisocyanat **B1** und einer Isocyanat-reaktiven Verbindung,
oder

c) Mischungen aus **B1** und **B2,**

in Gegenwart von

(iii) wenigstens eines Treibmittels **A2** und

(iv) wenigstens eines Katalysators **A3,** wobei carbanionische Katalysatoren ausgeschlossen sind.

Der Begriff *Carboxyl-Endgruppen* umfasst dabei sowohl COOH- als auch COO-Endgruppen. Bevorzugt sind COOH-Endgruppen, d. h. bevorzugt sind die Carboxyl-Endgruppen umfassenden Polyester *Carbonsäure-Endgruppen umfassenden Polyester.*

Die *Hydroxvlzahl* gibt dabei die Menge an Kaliumhydroxid in Milligramm an, welche der bei einer Acetylierung von einem Gramm Substanz gebundenen Menge Essigsäure gleichwertig ist. Sie wird bestimmt nach der Norm DIN 53240 in der Fassung vom Dezember 1971.

*Funktionalität* bezeichnet im Rahmen der vorliegenden Erfindung die theoretische, aus den bekannten Einsatzstoffen und deren Mengenverhältnissen berechnete Funktionalität.

Unter der *Kennzahl* (auch *Isocyanat-Index* genannt) wird dabei der Quotient aus der tatsächlich eingesetzten Stoffmenge [Mol] an Isocyanat-Gruppen und der für vollständigen Umsatz aller Isocyanat-reaktiven Gruppen stöchiometrisch benötigten Stoffmenge [Mol] an Isocyanat-Gruppen, multipliziert mit 100, verstanden. Da für die Umsetzung eines Mols einer Isocyanat-reaktiven Gruppe ein Mol einer Isocyanat-Gruppe benötigt wird, gilt:

$$\text{Kennzahl} = (\text{Mole Isocyanat-Gruppen} / \text{Mole Isocyanat-reaktive Gruppen}) \cdot 100$$

Der Begriff *Treibmittel* umfasst im Rahmen der vorliegenden Erfindung sowohl physikalische als auch chemische Treibmittel. Unter chemischen Treibmitteln werden dabei solche Verbindungen verstanden, die durch Reaktion mit Isocyanat gasförmige Produkte bilden. Demgegenüber werden unter physikalischen Treibmitteln solche Verbindungen verstanden, die in flüssiger oder gasförmiger Form eingesetzt werden und keine chemische Reaktion mit dem Isocyanat eingehen.

Unter *carbanionischen Katalysatoren* werden im Rahmen der vorliegenden Erfindung solche Katalysatoren verstanden, die eine Struktureinheit mit (in wenigstens einer Grenzstruktur) einem formal negativ geladenen Kohlenstoffatom aufweisen. Der Acetylacetonato-Ligand gilt bspw. im Rahmen der vorliegenden Erfindung als Carbanion, weil sich eine sinnvolle Grenzstruktur mit einem formal negativ geladenen Kohlenstoffatom aufstellen lässt, nämlich **II**:

$$CH_3(C{-}O^{(-)}){=}CH(C{=}O)CH_3 \leftrightarrow CH_3(C{=}O)CH^{(-)}(C{=}O)CH_3 \leftrightarrow CH_3(C{=}O)CH{=}(C{-}O^{(-)})CH_3$$

**I** **II** **III**

Dagegen gilt bspw. der Acetatligand nicht als Carbanion, weil in beiden sinnvollen Grenzstrukturen die negative Ladung formal an einem Sauerstoffatom lokalisiert ist.

*PUR/PIR-Hartschanmstoffe* ***C*** im Sinne der vorliegenden Erfindung sind insbesondere solche PUR/PIR-Schäume, deren Rohdichte gemäß DIN EN ISO 3386-1-98 in der Fassung vom September 2010 im Bereich von 15 kg/m$^3$ bis 300 kg/m$^3$ liegt und deren Druckfestigkeit nach DIN EN 826 in der Fassung vom Mai 1996 im Bereich von 0,1 MPa bis 3 MPa liegt.

Ausführungsformen der vorliegenden Erfindung werden nachfolgend beschrieben, wobei die einzelnen Ausführungsformen frei miteinander kombiniert werden können, sofern sich aus dem Kontext nicht eindeutig das Gegenteil ergibt.

Zur Umsetzung mit dem Epoxid (1) in **Schritt (I)** eignen sich grundsätzlich alle Carboxyl-Endgruppen umfassenden Polyester, sofern ihr Einsatz zu einem Polyol **A1a** führt, das den erfindungsgemäßen Anforderungen an Funktionalität und Hydroxylzahl genügt. Die Herstellung solcher Carboxyl-Endgruppen umfassender Polyester (im Folgenden auch *Polyestercarboxylate* genannt) ist an sich bekannt und erfolgt bevorzugt durch Polykondensation von niedermolekularen Polyolen und niedermolekularen Polycarbonsäuren, einschließlich deren Anhydriden und deren Alkylestern. Weiterhin können Hydroxycarbonsäuren einschließlich deren innerer Anhydride (Lactone) verwendet oder mitverwendet werden. Die genannten Gruppen an Carbonsäure(derivate)n werden im Folgenden auch summarisch als *Carbonsäureäquivalente* bezeichnet.

Die erfindungsgemäß einsetzbaren Polyestercarboxylate haben überwiegend Carboxyl-Endgruppen. Demgegenüber weisen sie nur in einem sehr untergeordnetem Maße Hydroxyl-Endgruppen auf. Bevorzugt sind 80 Mol-% bis 100 Mol-%, besonders bevorzugt 90 Mol-% bis 100 Mol-% aller Endgruppen Carboxylgruppen. Geeignete Polyestercarboxylate können Molekülmassen im Bereich von 250 Da bis 10000 Da, bevorzugt von 300 Da bis 6000 Da, aufweisen. Unabhängig vom vorher Ausgeführten kann die Anzahl der Carboxyl-Endgruppen im Polyestercarboxylat 2, 3, 4, 5 oder

6 betragen. Die durchschnittliche Funktionalität der Polyestercarboxylate ist bevorzugt ≥ 2 bis ≤ 3.

Zur Herstellung der Polyestercarboxylate einsetzbare niedermolekulare Polyole sind bevorzugt solche mit Hydroxylfunktionalitäten von ≥ 2 bis ≤ 8. Sie haben in bevorzugten Ausführungsformen zwischen 2 und 36, besonders bevorzugt zwischen 2 und 12, Kohlenstoffatome. Bevorzugt stammen mindestens 90 Mol-%, besonders bevorzugt 100 Mol-%, aller Alkoholgruppen der Alkoholkomponente, aus der der Carboxyl-Endgruppen umfassende Polyester aufgebaut wird, aus unverzweigten $\alpha,\omega$-Diolen (bezogen auf einen Gesamtgehalt an Alkoholgruppen in der Alkoholkomponente, aus der der Carboxyl-Endgruppen umfassende Polyester aufgebaut wird, von 100 Mol-%). Ganz besonders bevorzugt sind Polyole aus der Gruppe:

Ethylenglykol und Diethylenglykol einschließlich deren höherer Homologe, 1,3-Propandiol, 1,4-Butandiol, 1,5-Pentandiol, 1,6-Hexandiol, 1,7-Heptandiol, 1,8-Octandiol, 1,9-Nonandiol, 1,10-Decandiol, 1,11-Undecandiol, 1,12-Dodecandiol, einschließlich deren höherer Homologe.

Selbstverständlich können auch Gemische dieser Polyole untereinander oder mit weiteren Polyolen eingesetzt werden, wobei im letzteren Fall die genannten Polyole bevorzugt mindestens 90 Mol-% aller Hydroxylgruppen beisteuern.

Grundsätzlich möglich, wenn auch nicht bevorzugt, ist der zusätzliche Einsatz von Polyolen aus der Gruppe:

1,2-Propandiol, Dipropylenglykol und dessen höhere Homologe, 2-Methylpropandiol-1,3, Neopentylglykol, 3-Methylpentandiol-1,5, Glycerin, Pentaerythrit, 1,1,1-Trimethylolpropan und Kohlenhydrate mit 5 bis 12 Kohlenstoffatomen (wie bspw. Isosorbid).

Diese können ebenfalls untereinander oder mit weiteren Polyolen gemischt werden. In jedem Fall steuern jedoch bei Verwendung dieser Polyole die weiter oben als ganz besonders bevorzugt gekennzeichneten unverzweigten $\alpha,\omega$-Diole mindestens 90 Mol-% aller Hydroxylgruppen bei.

Zur Herstellung der Polyestercarboxylate einsetzbare niedermolekulare Polycarbonsäureäquivalente haben insbesondere 2 bis 36, bevorzugt 2 bis 12 Kohlenstoffatome. Die niedermolekularen Polycarbonsäureäquivalente können aliphatisch oder aromatisch sein. Sie sind bevorzugt ausgewählt aus der Gruppe:

Bernsteinsäure, Fumarsäure, Maleinsäure, Maleinsäureanhydrid, Glutarsäure, Adipinsäure, Sebacinsäure, Korksäure, Azelainsäure, 1,10-Decandicarbonsäure, 1,12-Dodecandicarbonsäure, Phthalsäure, Phthalsäureanhydrid, Isophthalsäure, Terephthalsäure, Pyromellitsäure und Trimellitsäure.

Selbstverständlich können auch Gemische dieser niedermolekularen Polycarbonsäureäquivalente untereinander oder mit weiteren Polycarbonsäureäquivalenten eingesetzt werden, wobei im letzteren Fall die genannten Polycarbonsäuren bevorzugt mindestens 90 Mol-% aller Carboxylgruppen beisteuern.

Werden Hydroxycarbonsäuren einschließlich deren innerer Anhydride (Lactone) verwendet oder mitverwendet, dann wird bevorzugt Caprolacton und/oder 6-Hydroxycapronsäure eingesetzt.

In einer ganz besonders bevorzugten Ausführungsform wird der Carboxyl-Endgruppen umfassende Polyester erhalten aus der Reaktion von

(i) wenigstens einem Alkohol ausgewählt aus der Gruppe bestehend aus

Ethylenglykol, Diethylenglykol, Polyethylenglykol, 1,2-Propylenglykol, Dipropylenglykol, 1,3-Propandiol, 1,4-Butandiol, 1,6-Hexandiol, 1,8-Octandiol, 1,10-Decandiol, 1,12-Dodecandiol, 2-Methylpropandiol-1,3, Neopentylglykol, 3-Methylpentandiol-1,5, Glycerin, Pentaerythrit und 1,1,1-Trimethylolpropan,

mit

(ii) wenigstens einem Carbonsäureäquivalent ausgewählt aus der Gruppe bestehend aus

Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure und Caprolacton.

Die Polykondensation von Alkoholen und Carbonsäureäquivalenten erfolgt bevorzugt ohne Katalysator, kann aber auch durch die dem Fachmann bekannten Katalysatoren katalysiert werden. Die Polykondensation kann nach geläufigen Methoden, zum Beispiel bei erhöhter Temperatur, im Vakuum, als Azeotropveresterung und nach dem Stickstoffblasverfahren durchgeführt werden. In jedem Fall wird die Polykondensation nicht auf einer bestimmten Stufe abgebrochen, sondern unter Entfernen des gebildeten Wassers bis zu einem möglichst vollständigen Umsatz der OH-Gruppen des Alkohols unter Bildung von Carboxyl-Endgruppen durchgeführt.

In bestimmten Fällen kann es sinnvoll sein, die Herstellung des Carboxyl-Endgruppen umfassenden Polyesters in Schritt (I) in zwei Schritten durchzuführen, insbesondere bei Einsatz solcher Carbonsäureäquivalente, die zu Sublimation neigen (wie bspw. Phthalsäure, die sich in einer Produktionsanlage leicht in Bereichen geringerer Temperatur niederschlägt). Im ersten Schritt wird ein Zwischenprodukt mit Hydroxylendgruppen hergestellt, welches in einem zweiten Schritt mit einem Anhydrid zum gewünschten Polyestercarboxylat umgesetzt wird. In dieser Ausführungsform betrifft die Erfindung insbesondere ein Verfahren, bei dem die Herstellung des in Schritt (I) eingesetzten Carboxyl-Endgruppen umfassenden Polyesters die folgenden Schritte umfasst:

(i) Kondensation von wenigstens einem Alkohol ausgewählt aus der Gruppe bestehend aus

Ethylenglykol, Diethylenglykol, Polyethylenglykol, 1,2-Propylenglykol, Dipropylenglykol, 1,3-Propandiol, 1,4-Butandiol, 1,6-Hexandiol, 1,8-Octandiol, 1,10-Decandiol, 1,12-Dodecandiol, 2-Methylpropandiol-1,3, Neopentylglykol, 3-Methylpentandiol-1,5, Glycerin, Pentaerythrit und 1,1,1-Trimethylolpropan,

mit
wenigstens einem Carbonsäureäquivalent ausgewählt aus der Gruppe bestehend aus

Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure und Caprolacton,

wobei das molare Verhältnis von Alkohol(en) zu Carbonsäureäquivalent(en) so gewählt wird, dass ein Verfahrensprodukt mit endständigen Alkoholgruppen erhalten wird;

(ii) Umsetzung des in (i) erhaltenen Verfahrensproduktes mit wenigstens einem Carbonsäureanhydrid ausgewählt aus der Gruppe bestehend aus

Phthalsäureanhydrid, Maleinsäureanhydrid, Glutarsäureanhydrid und Bernsteinsäureanhydrid, bevorzugt Phthalsäureanhydrid.

Bevorzugt wird Schritt (i) bei einer Temperatur T(i) von 150 °C bis 250 °C und Schritt (ii) bei einer Temperatur T(ii) von 120 °C bis 250 °C, bevorzugt von 120 °C bis 200 °C, besonders bevorzugt von 120 °C bis 180 °C durchgeführt. Je geringer die Temperatur in Schritt (ii) ist, desto kleiner ist die Gefahr unerwünschter Umesterungen.

Insbesondere für solche Anwendungsgebiete für PUR/PIR-Hartschaumstoffe, bei denen besonders hohe Anforderungen hinsichtlich des Brandverhaltens gestellt werden, ist diese Ausführungsform vorteilhaft. Die geschilderte zweistufige Synthese eignet sich hervorragend zur Herstellung solcher Polyestercarboxylate, die überwiegend bis vollständig Phthalsäuregruppen als Esterbestandteile enthalten. Es ist bekannt, dass sich Phthalsäure äußerst günstig auf das Brandverhalten auswirkt.

Das Epoxid der allgemeinen Formel (1) ist ein terminales Epoxid mit einem Substituenten R1, welcher ein Alkylrest oder ein Arylrest sein kann. Der Begriff "Alkyl" umfasst allgemein im Zusammenhang der gesamten Erfindung Substituenten aus der Gruppe n-Alkyl, verzweigtes Alkyl und/oder Cycloalkyl. Der Begriff "Aryl" umfasst allgemein im Zusammenhang der gesamten Erfindung Substituenten aus der Gruppe einkernige Carbo- oder Heteroarylsubstituenten und/oder mehrkernige Carbo- oder Heteroarylsubstituenten. Insbesondere ist beim erfindungsgemäßen Verfahren bevorzugt, dass in der allgemeinen Formel (1) R1

Methyl, Ethyl, n-Propyl, iso-Propyl, n-Butyl, sec-Butyl, iso-Butyl, tert-Butyl, Cyclohexyl oder Phenyl

ist.

In einer Ausführungsform des erfindungsgemäßen Verfahrens wird der Carboxyl-Endgruppen umfassende Polyester hergestellt, indem pro Mol Hydroxylgruppen eines Alkohols ≥ 1,03 Mol bis ≤ 1,90 Mol Carboxylgruppenäquivalente eingesetzt werden. Durch den Überschuss der Carboxylgruppenäquivalente lässt sich erreichen, dass ein weit überwiegender Teil der Endgruppen oder sogar alle Endgruppen des Polyesters Carboxylgruppen sind. Der Überschuss an Carboxylgruppen kann auch ≥ 1,04 Mol bis ≤ 1,85 Mol oder ≥ 1,05 Mol bis ≤ 1,5 Mol pro Mol Hydroxylgruppen betragen.

Die Umsetzung des Carboxyl-Endgruppen umfassenden Polyesters mit dem Epoxid (1) unter Bildung des Polyesterpolyols mit sekundären Hydroxylendgruppen **A1a** erfolgt in an sich bekannter Weise. Das molare Verhältnis von Epoxid zu Carboxyl-Endgruppe im erfindungsgemäßen Verfahren liegt dabei zwischen 0,8 : 1 und 50 : 1, bevorzugt

zwischen 1 : 1 und 20 : 1, besonders bevorzugt zwischen 1,05 : 1 und 5 : 1.

In einer bevorzugten Ausführungsform betrifft die Erfindung ein Verfahren, bei dem in der Verschäumung ein Polyesterpolyol **A1a** eingesetzt wird, in dem das molare Verhältnis von primären Hydroxyl-Endgruppen zu sekundären Hydroxyl-Endgruppen zwischen 0 : 1 und 1 : 1, bevorzugt zwischen 0,01 :1 und 0,66: 1 beträgt. Hierunter ist das molare Verhältnis in dem Polyesterpolyol **A1a** insgesamt, also nicht auf ein einzelnes Molekül bezogen, zu verstehen. Es lässt sich zum Beispiel mittels $^{1}H$-NMR-Spektroskopie bestimmen. Je größer der Anteil an sekundären Hydroxylgruppen im Polyesterpolyol, desto langsamer ist die Reaktionsgeschwindigkeit in der Verschäumung und desto einfacher lässt sich ein einheitliches Reaktionsprofil sicherstellen.

In einer weiteren Ausführungsform des erfindungsgemäßen Verfahrens wird das Polyestercarboxylat unmittelbar vor der Reaktion mit dem Epoxid der allgemeinen Formel (1) hergestellt. Dieses bedeutet, dass direkt im Anschluss an die Herstellung des Polyestercarboxylats die Umsetzung mit dem Epoxid unter Bildung von **A1a** durchgeführt wird. Vorteilhafterweise wird die Umsetzung durchgeführt, indem das Epoxid dem Reaktionsgemisch aus der Polyestersynthese hinzugefügt wird. Dieses erfolgt vorteilhafterweise in derselben Produktionsanlage. Auf diese Weise wird Produktionszeit eingespart.

In einer weiteren Ausführungsform des erfindungsgemäßen Verfahrens findet in der Herstellung der Polyesterpolyole **A1a** die Reaktion mit dem Epoxid der allgemeinen Formel (1) bei einer Temperatur von ≥ 70 °C bis ≤ 150 °C statt. Die Reaktionstemperatur kann vorzugsweise ≥ 80 °C bis ≤ 130 °C betragen.

Bevorzugt wird die Reaktion des Epoxids (1) mit dem Polyestercarboxylat in Gegenwart eines Katalysators, welcher mindestens ein Stickstoffatom im Molekül umfasst, durchgeführt. Die Menge dieses stickstoffhaltigen Katalysators, bezogen auf die Gesamtmasse des Reaktionsansatzes, kann beispielsweise zwischen 10 ppm und 10000 ppm, bevorzugt zwischen 50 ppm und 5000 ppm, besonders bevorzugt zwischen 100 ppm bis ≤ 2000 ppm betragen.

Die Herstellung des Polyesterpolyols mit sekundären Hydroxyl-Endgruppen **A1a** wird bevorzugt in Gegenwart wenigstens eines Katalysators durchgeführt, der ausgewählt ist aus:

(i) Aminen der allgemeinen Formel (2):

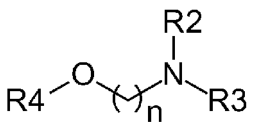 (2)

wobei gilt:

R2 und R3 sind unabhängig voneinander Wasserstoff, Alkyl oder Aryl;

oder

R2 und R3 bilden gemeinsam mit dem sie tragenden N-Atom einen aliphatischen, ungesättigten oder aromatischen Heterozyklus;

n ist eine ganze Zahl von 1 bis 10;

R4 ist Wasserstoff, Alkyl oder Aryl; oder

R4 steht für $-(CH_2)_x-N(R41)(R42)$, wobei gilt:

R41 und R42 sind unabhängig voneinander Wasserstoff, Alkyl oder Aryl; oder

R41 und R42 bilden gemeinsam mit dem sie tragenden N-Atom einen aliphatischen, ungesättigten oder aromatischen Heterozyklus;

x ist eine ganze Zahl von 1 bis 10;

oder

(ii) Aminen der allgemeinen Formel (3):

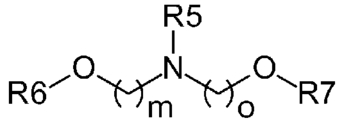 (3)

wobei gilt:

R5 ist Wasserstoff, Alkyl oder Aryl;

R6 und R7 sind unabhängig voneinander Wasserstoff, Alkyl oder Aryl;

m und o sind unabhängig voneinander eine ganze Zahl von 1 bis 10;

oder

(iii) Stickstoffverbindungen ausgewählt aus der Gruppe bestehend aus:

Diazabicyclo[2.2.2]octan, Diazabicyclo[5.4.0]undec-7-en, Dialkylbenzylamin, Dimethylpiperazin, 2,2'-Dimorpholinyldiethylether, Pyridin;

oder

(iv) Mischungen von Katalysatoren aus mindestens zwei Gruppen der Gruppen (i) bis (iii).

Amine der allgemeinen Formel (2) können im weitesten Sinne als Aminoalkohole oder deren Ether beschrieben werden. Ist R4 Wasserstoff, so sind die Katalysatoren in eine Polyurethanmatrix einbaubar, wenn das Polyesterpolyol mit einem Polyisocyanat umgesetzt wird. Dieses ist vorteilhaft, um das Austreten des Katalysators, der im Falle von Aminen mit nachteiligen Geruchsproblemen einhergehen kann, an die Polyurethanoberfläche, die sogenannte "fogging"- oder VOC (volatile organic compounds)-Problematik, zu verhindern.

Amine der allgemeinen Formel (3) können im weitesten Sinne als Amino(bis)alkohole oder deren Ether beschrieben werden. Sind R6 oder R7 Wasserstoff, so sind diese Katalysatoren ebenfalls in eine Polyurethanmatrix einbaubar.

Die genannten Katalysatoren können die Reaktion der Carboxyl-Gruppen mit dem Epoxid in einer Weise beeinflussen, dass ein höherer Anteil an gewünschten sekundären OH-Endgruppen im Polyesterpolyol erhalten wird.

Solche Verbindungen können in bestimmten Varianten auch als sogenannte Treibkatalysatoren verwendet werden, das heißt, sie katalysieren bevorzugt die Reaktion der Isocyanatgruppen mit Wasser unter Bildung von Kohlendioxid, in geringerem Ausmaß auch deren Reaktion mit Hydroxylgruppen unter Bildung von Urethangruppen. Daher kann diese Zusammensetzung unmittelbar weiter in der Herstellung von Polyurethanen eingesetzt werden.

In einer besonders bevorzugten Ausführungsform betrifft die Erfindung ein Verfahren bei dem in der allgemeinen Formel (2)

R2 und R3 Methyl sind, R4 Wasserstoff ist und n = 2 ist, d. h. der Katalysator (2) N,N-Dimethylethanolamin ist, oder

R2 und R3 Methyl sind, R4 $-(CH_2)_2-N(CH_3)_2$ ist und n = 2 ist, d. h. der Katalysator (2) Bis(2-(dimethylamino)ethyl)ether ist,

und bei dem in der allgemeinen Formel (3)

R5 Methyl ist, R6 und R7 Wasserstoff sind, m = 2 ist und o = 2 ist, d. h. der Katalysator (3) N-Methyldiethanolamin ist.

Durch die Reaktion der Carboxyl-Gruppen des Polyesters mit dem Epoxid entstehen unter Ringöffnung je nach Ort des Angriffs auf den Epoxidring primäre oder sekundäre Alkohole. Vorzugsweise reagieren ≥ 80 %, ≥ 90 % oder ≥ 95 % der Carboxyl-Gruppen mit dem Epoxid.

Die Polyolkomponente **A1** kann neben **A1a** noch weitere Polyole umfassen. In diesem Fall beträgt der Anteil an **A1a** bevorzugt mindestens 40 Massen-%, besonders bevorzugt mindestens 50 Massen-%, ganz besonders bevorzugt mindestens 60 Massen-%, jeweils bezogen auf die Gesamtmasse von **A1**, d. i. die Summe der Massen aller eingesetzten Polyole. In dieser bevorzugten Ausführungsform betrifft die Erfindung also ein Verfahren, bei dem die in **Schritt (II)** eingesetzte Polyolkomponente **A1** zusätzlich zu dem Polyesterpolyol mit sekundären Hydroxyl-Endgruppen **A1a** wenigstens ein aliphatisches Polyetherpolyol **A1b** mit einer Hydroxylzahl zwischen 15 mg KOH/g und 500 mg KOH/g, bevorzugt von 20 mg KOH/g bis 450 mg KOH/g und einer Funktionalität von 1,5 bis 5,5, bevorzugt von 1,8 bis 3,5, umfasst. Es können auch mehrere aliphatische Polyetherpolyole **A1b** eingesetzt werden. Bevorzugt werden zwei aliphatische Polyetherpolyole **A1b(I)** und **A1b(II)** eingesetzt, die beide den zuvor genannten Anforderungen an Hydroxylzahl und Funktionalität genügen.

Erfindungsgemäß geeignete aliphatische Polyetherpolyole **A1b** sind erhältlich durch Alkoxylierung von mindestens bifunktionellen Starterverbindungen, bevorzugt Aminen, Alkoholen oder Aminoalkoholen, bevorzugt unter Einsatz von Alkalihydroxid- oder Doppelmetallcyanid-Katalysatoren.

Auch der Einsatz weiterer Polyole neben **A1a** oder neben **A1a** und **A1b** ist denkbar. Insbesondere kommen auch Polyethercarbonatpolyole **A1c,** wie sie beispielsweise durch katalytische Umsetzung von Epoxiden und Kohlendioxid in Anwesenheit von H-funktionellen Startersubstanzen erhältlich sind (siehe z. B. EP-A-2 046 861), in Frage. Diese Polyethercarbonatpolyole haben im Allgemeinen eine Funktionalität von 2 bis 8, bevorzugt von 2 bis 7 und besonders bevorzugt von 2 bis 6. Die zahlengemittelte Molmasse beträgt bevorzugt 400 g/mol bis 10000 g/mol und besonders bevorzugt 500 g/mol bis 6000 g/mol.

Die Isocyanate **B1** sind hinsichtlich der Isomere von einzelnen Mitgliedern der Gruppe zunächst nicht weiter beschränkt. So können beispielsweise 2,4-TDI oder 2,6-TDI sowie im Fall des MDI die 2,2'-, 2,4'- und 4,4'-Isomere eingesetzt werden. Polyphenylenpolymethylenpolyisocyanat kann beispielsweise 6, 7, 8, 9 oder 10 MDI-Monomere enthalten.

Die Prepolymere **B2** sind Reaktionsprodukte der Isocyanate **B1** mit Isocyanat-reaktiven Verbindungen im stöchiometrischen Unterschuss. Beispiele für geeignete Isocyanat-reaktive Verbindungen sind Polyole, insbesondere auf Propylen- und/oder Ethylenoxid basierte Polyetherpolyole. Es können aber auch Polyesterpolyole und Polyetheresterpolyole verwendet werden.

Geeignete Treibmittel **A2** sind insbesondere Wasser, Cyclopentan, n-Pentan, iso-Pentan, Fluorkohlenwasserstoffe, wie bspw. "HFC 245fa" (1,1,1,3,3-Pentafluorpropan), "HFC 365mfc" (1,1,1,3,3-Pentafluorbutan) oder deren Mischungen mit "HFC 227ea" (Heptafluorpropan), und teilhalogenierte Alkene mit 3 oder 4 Kohlenstoffatomen.

Geeignete Katalysatoren **A3** sind insbesondere Triethylendiamin, N,N-Dimethylcyclohexylamin, Tetramethylendiamin, 1-Methyl-4-dimethylaminoethylpiperazin, Triethylamin, Tributylamin, Dimethylbenzylamin, Dicyclohexylmethylamin , N,N',N"-Tris-(dimethylaminopropyl)hexahydrotriazin, Tris-(dimethylaminopropyl)amin, Tris(dimethylaminomethyl)phenol Dimethylaminopropylformamid, N,N,N',N'-Tetramethylethylendiamin, N,N,N',N'-Tetramethylbutandiamin, Tetramethylhexandiamin, Pentamethyldiethylentriamin, Pentamethyldipropylentriamin, Tetramethyldiaminoethylether, Dimethylpiperazin, 1,2-Dimethylimidazol, 1-Azabicyclo[3.3.0]octan, Bis-(dimethylaminopropyl)-harnstoff N-Methylmorpholin, N-Ethylmorpholin, N-Cyclohexylmorpholin, 2,3-Dimethyl- 3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-di-methylaminopropyl)-s-hexahydrotriazin, Tetramethylammoniumhydroxid, Natrium-N-[(2-hydroxy-5-nonylphenyl)methyl]-N-methylaminoacetat, Natriumacetat, Natriumoctoat, Kaliumacetat, Kaliumoctoat und Natriumhydroxid.

Insbesondere ist es beim erfindungsgemäßen Verfahren bevorzugt, dass der Katalysator **A3** ausgewählt ist aus der Gruppe bestehend aus:

> Triethylendiamin, N,N-Dimethylcyclohexylamin, Tetramethylendiamin, 1-Methyl-4-dimethylaminoethylpiperazin, Triethylamin, Tributylamin, Dimethylbenzylamin, Dicyclohexylmethylamin, N,N',N"-Tris-(dimethylaminopropyl)hexahydrotriazin, Tris-(dimethylaminopropyl)amin, Tris(dimethylaminomethyl)phenol, Dimethylaminopropylformamid, N,N,N',N'-Tetramethylethylendiamin, N,N,N',N'-Tetramethylbutandiamin, Tetramethylhexandiamin, Pentamethyldiethylentriamin, Pentamethyldipropylentriamin , Tetramethyldiaminoethylether, Dimethylpiperazin, 1,2-Dimethylimidazol, 1-Azabicyclo[3.3.0]octan, Bis-(dimethylaminopropyl)- harnstoff N-Methylmorpholin, N-Ethylmorpholin, N-Cyclohexylmorpholin, 2,3-Dimethyl- 3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-di-methylaminopropyl)-s-hexahydrotriazin, Tetramethylammoniumhydroxid, Natrium-N-[(2-hydroxy-5-nonylphenyl)methyl]-N-methylaminoacetat, Natriumacetat, Natriumoctoat, Kaliumacetat, Kaliumoctoat und Natriumhydroxid,

und dass das Treibmittel **A2** ausgewählt ist aus der Gruppe bestehend aus:

> Wasser, Cyclopentan, n-Pentan, iso-Pentan, Fluorkohlenwasserstoffe und teilhalogenierte Alkene mit 3 oder 4 Kohlenstoff-Atomen, wobei Cyclopentan, n-Pentan und iso-Pentan bevorzugt sind und Cyclopentan besonders bevorzugt ist.

Die erfindungsgemäße Herstellung der PUR/PIR-Hartschaumstoffe **C** kann weiterhin unter Zuhilfenahme der dem Fachmann bekannten Hilfs- und Zusatzstoffe, wie beispielsweise Flammschutzmittel **A4,** Schaumstabilisatoren **A5,** etc., erfolgen.

Besonders bevorzugt ist es, die Komponenten **A1** bis **A5** und ggf. weitere Hilfs- und Zusatzstoffe (wie bspw. Emulgatoren, Füllstoffe) vor der Verschäumung mit der Isocyanatkomponente **B** zu einer Isocyanat-reaktiven Zusammensetzung **A** zu vermischen. In dieser Ausführungsform betrifft die Erfindung ein Verfahren, bei dem Schritt (II) in Gegenwart von

(v) wenigstens eines Flammschutzmittels **A4** und

(vi) wenigstens eines Schaumstabilisators **A5**

derart durchgeführt wird, dass zunächst eine Isocyanat-reaktive Zusammensetzung **A,** umfassend die, bevorzugt bestehend aus den, Komponenten **A1** bis **A5,** durch Vermischen dieser Komponenten in beliebiger Reihenfolge im Massenverhältnis **A : A2** von 2,5 : 1 bis 25 : 1 hergestellt wird, sodass eine Lösung von **A2** in **A** oder eine Emulsion von **A2** in **A** erhalten wird, und dann die Isocyanat-reaktive Zusammensetzung **A** mit der Isocyanatkomponente **B** zum Polyurethan-Polyisocyanurat-Hartschaum **C** verschäumt wird. Bevorzugt liegt der Massenanteil der Polyolkomponente **A1** in der Isocyanat-reaktiven Zusammensetzung **A,** zwischen 55 Massen-% und 85 Massen-%, besonders bevorzugt zwischen 60 Massen-% und 80 Massen-%, ganz besonders bevorzugt zwischen 65 Massen-% und 75 Massen-%.

Erfindungsgemäß erfolgt die Verschäumung der einzelnen Komponenten zum PUR/PIR-Hartschaumstoff **C** bei Kennzahlen von 180 bis 400, bevorzugt von 200 bis 380, besonders bevorzugt von 220 bis 360. Die gewählte Kennzahl bestimmt hierbei den Anteil an Isocyanurat-Strukturelementen. Deren Anteil steigt mit zunehmender Kennzahl. Im Allgemeinen verbessert eine hohe Kennzahl das Brandverhalten, wirkt sich jedoch negativ auf die Sprödigkeit der Schäume aus, sodass die optimale Kennzahl je nach dem genauen Anforderungsprofil der PUR/PIR-Hartschaumstoffe **C** variieren kann.

Ein weiterer Gegenstand der Erfindung sind die mit dem erfindungsgemäßen Verfahren erhältlichen PUR/PIR-Hartschaumstoffe **C.**

Die Herstellung der erfindungsgemäßen PUR-PIR-Hartschaumstoffe **C** erfolgt in verfahrenstechnischer Hinsicht nach dem Fachmann bekannten Verfahren. Beispiele sind in US 2,764,565 in G. Oertel (Hrsg.) "Kunststoff-Handbuch", Band VII, Carl Hanser Verlag, 3. Auflage, München 1993, S. 267 bis 354, sowie in K. Uhlig (Hrsg.) "Polyurethan Taschenbuch", Carl Hanser Verlag, 2. Auflage, Wien 2001, S. 83 - 102 beschrieben.

In der Regel ist es zweckmäßig, die einzelnen Komponenten gegen eine geeignete Deckschicht zu verschäumen. In dieser Ausführungsform betrifft die Erfindung ein Verfahren, bei dem die Verschäumung gegen wenigstens eine Deckschicht **D** unter Bildung eines Verbundelements **E** umfassend den Polyurethan-Polyisocyanurat-Hartschaumstoff **C** und wenigstens eine Deckschicht **D** durchgeführt wird. Bevorzugte Materialien, aus denen die Deckschicht **D** besteht, sind dabei ausgewählt aus der Gruppe bestehend aus Beton, Holz, Pressspan, Aluminium, Kupfer, Stahl, Edelstahl und Kunststoff. Bevorzugte Kunststoffe sind Acrylnitril-Butadien-Styrol-Copolymere, Polyethylen, Polystyrol, Polyvinylchlorid und Polypropylen. Die Art der Deckschicht **D** ist dabei grundsätzlich nicht begrenzt; es kann sich um Formteile, Konstruktionselemente aus dem Bauwesen, Rohre, Gehäuseteile, etc. handeln.

Ein Gegenstand der vorliegenden Erfindung sind ferner die so erhältlichen Verbundelemente **E.** Diese können auch mehrere, insbesondere zwei, Deckschichten umfassen, zwischen denen sich der erfindungsgemäße PUR/PIR-Hartschaumstoff **C** befindet. Bei solchen sog. Sandwich-Verbundelementen aus zwei Deckschichten mit einer dazwischen liegenden Kernschicht aus dem erfindungsgemäßen PUR-PIR-Hartschaumstoff **C** kann es sich zum Beispiel um Paneele (welche bspw. Verwendung im Industriehallenbau finden) oder Rohre (welche bspw. im Transport von Fernwärme Verwendung finden) oder Gehäuse von Warmwasserboilern handeln. Im Fall der Paneele bestehen die beiden Deckschichten bevorzugt aus Aluminium, Kupfer, Stahl, Edelstahl, Holz oder Beton, wobei für die beiden Deckschichten nicht notwendigerweise dasselbe Material eingesetzt werden muss. Im Fall der Rohre liegt bevorzugt ein Verbund eines inneren Rohrs (die innere Deckschicht) aus Metall (bevorzugt aus einem der oben genannten Metalle), gefolgt von einer Schicht des erfindungsgemäßen PUR/PIR-Hartschaumstoffs **C** (die Kernschicht), gefolgt von einer Rohrummantelung aus einem thermoplastischen Kunststoff (die äußere Deckschicht) vor. Im Fall der Gehäuse von Warmwasserboilern liegt bevorzugt ein Verbund aus einer Metallhülle (bevorzugt aus einem der oben genannten Metalle), dem erfindungsgemäßen PUR/PIR-Hartschaumstoff **C** und dem äußeren Gehäuse aus einem Metall (bevorzugt aus einem der oben genannten Metalle) oder einem thermoplastischen Kunststoff vor.

Die Herstellung solcher Verbundelemente **E** ist an sich bekannt und vielfach beschrieben. Sie erfolgt, abhängig vom Anwendungsgebiet, nach kontinuierlichen oder diskontinuierlichen Verfahren.

**Beispiele**

Die Erfindung soll anhand der nachfolgenden Beispiele näher erläutert werden. Folgende Analysenmethoden kamen zum Einsatz:

| | |
|---|---|
| Hydroxylzahl: | DIN 53240 (Dezember 1971). |
| Säurezahl: | nach DIN EN ISO 2114 (Juni 2002) |

Haftung eines Schaums an Metallflächen: Die Bestimmung erfolgt an Metall-Schaumstoff-Sandwich-Verbundelementen mit einer oberen und einer unteren metallischen Deckschicht in Anlehnung an die Norm DIN EN 14509 vom Februar 2007: Die Probenkörper werden für den Querzugversuch in den Dimensionen 100 mm x 100 mm aus dem Verbundelement herausgeschnitten und werden bei der Prüfung senkrecht zur Deckschichtebene mit einer Geschwindigkeit von 10 mm/min auseinandergezogen, bis der Schaum oder die Haftung zwischen Schaum und Deckschicht versagt. Zur Ankopplung der Zugkräfte werden mittels Klebstoff an den Deckschichten Metalljoche (mit einer Öse versehene Metallbleche, wobei die Metallbleche die Schaumfläche vollständig bedecken) befestigt, die dann in die Prüfmaschine eingespannt werden. Bei gleichem Querschnitt wird jeweils die Haftung der beiden Deckschichten (oben und unten) einzeln gemessen. Hierzu wird aus beiden Seiten des Verbundelements ein Probenkörper mit einer Dicke von 15 mm geschnitten und die Deckschichtseite bzw. die Schaumseite mit dem Jochen verklebt. Es wird hier mit einer Geschwindigkeit von 5 mm/min gezogen, und die Spannung bei Bruch wird ermittelt.

| | |
|---|---|
| Verhältnis primärer zu sekundärer OH-Endgruppen: | Bestimmung mittels $^1$H-NMR-Spektroskopie (Bruker DPX 400, Deuterochloroform). |
| Abbindezeit: | Die Abbindezeit ("Gelpunkt $t_G$") wird |

ermittelt, indem man ein Holzstäbchen in die reagierende Polymerschmelze eintaucht und wieder herausnimmt. Sie charakterisiert den Zeitpunkt, ab dem sich die Polymerschmelze verhärtet. Als $t_G$ wird der Zeitpunkt angegeben, an dem sich erstmalig Fäden zwischen Holzstab und Polymerschmelze ziehen lassen.

**Beispiel 1: Herstellung eines Polyesterpolyols mit ausschließlich primären Hydroxyd-Endgruppen als Vergleich - Polyol 1**

In einem 10-Liter-4-Halskolben, ausgestattet mit Heizpilz, mechanischem Rührwerk, Innenthermometer, 40-cm-Füllkörper-Kolonne, Kolonnenkopf, absteigendem Intensivkühler, sowie Membranvakuumpumpe wurden 552,4 g (8,9 Mol) Ethylenglykol und 6560 g (48,96 Mol) technischer Glutarsäure unter Stickstoffüberschleierung vorgelegt und unter Rühren im Verlauf von 3 Stunden auf 200 °C erhitzt, wobei bei einer Kopftemperatur von 100 °C Wasser abdestillierte. Man senkte anschließend im Verlauf von 3 Stunden den Innendruck langsam auf 100 mbar ab und vervollständigte die Reaktion für weitere 8 Stunden. Man kühlte ab und bestimmte folgende Eigenschaften:

Analyse des Polyols 1:

| | |
|---|---|
| Hydroxylzahl: | 221 mg KOH/g |
| Viskosität (20 °C): | 1980 mPa s |

Molares Verhältnis primärer zu sekundärer OH-Endgruppen [mol/mol]: 100/0
Herstellungsbedingt wies das Polyol 1 eine Funktionalität von 2 auf.

**Beispiel 2: Herstellung eines Polyols mit überwiegend sekundären Hydroxyl-Endgruppen A1a (Schritt (I) des erfindungsgemäßen Verfahrens) - Polyol 2**

(i) Herstellung des Carboxyl-Endgruppen umfassenden Polyesters

In einem 10-Liter-4-Halskolben, ausgestattet mit Heizpilz, mechanischem Rührwerk, Innenthermometer, 40-cm-Füllkörper-Kolonne, Kolonnenkopf, absteigendem Intensivkühler, sowie Membranvakuumpumpe wurden 1887,6 g (17,8 Mol) Diethylenglykol, 552,4 g (8,9 Mol) Ethylenglykol und 6560 g (48,96 Mol) technische Glutarsäure unter Stickstoffüberschleierung vorgelegt und unter Rühren im Verlauf von 3 Stunden auf 200 °C erhitzt, wobei bei einer Kopftemperatur von 100 °C Wasser abdestillierte. Man senkte anschließend im Verlauf von 3 Stunden den Innendruck langsam auf 100 mbar ab und vervollständigte die Reaktion für weitere 8 Stunden. Man kühlte ab und bestimmte folgende Eigenschaften:

| | |
|---|---|
| Säurezahl: | 315 mg KOH/g |
| Viskosität: | 140 mPa s (75 °C), 520 mPa s (50 °C), 3530 mPa s (25 °C) |

(ii) Umsetzung des Carboxyl-Endgruppen umfassenden Polyesters mit Propylenoxid

In einem 1-1-Edelstahlreaktor wurden 300,0 g des Polyestercarboxylates aus (i) sowie 0,485 g (1000 ppm bezüglich des Gesamtansatzes) an N-Methyl-diethanolamin unter Schutzgas (Stickstoff) vorgelegt und dann auf 125 °C aufgeheizt. Anschließend wurden 184,5 g Propylenoxid während 60 Minuten zudosiert. Nach einer Nachreaktionszeit von 180 Minuten unter Rühren bei 125 °C wurden leichtflüchtige Anteile bei 90 °C (1 mbar) abdestilliert und das Reaktionsgemisch anschließend auf Raumtemperatur abgekühlt. Man bestimmte folgende Eigenschaften:

Analyse des Polyols 2:

| | |
|---|---|
| Hydroxylzahl: | 220 mg KOH/g |
| Säurezahl: | 0,02 mg KOH/g |
| Viskosität (25 °C): | 1193 mPas |

Molares Verhältnis primärer zu sekundärer OH-Endgruppen [mol/mol]: 37/63
Herstellungsbedingt wies das Polyol 2 eine Funktionalität von 2 auf.

**Beispiel 3: Herstellung der PUR-/PIR-Hartschaumstoffe**

Mit diesen Polyolen aus Beispiel 1 und 2 wurden im Labor PUR/PIR-Hartschaumstoffe hergestellt. Dazu wurden dem jeweiligen Polyol 1 bzw. 2 weitere Polyole 3 und 4 sowie Flammschutzmittel, Schaumstabilisator, Katalysator, Wasser und Treibmittel zugesetzt. Es kamen folgende Stoffe zum Einsatz:

| | |
|---|---|
| Polyol3: | Polyetherpolyol auf Basis Propylenoxid mit einer Hydroxylzahl von 440 mgKOH/g, einer Funktionalität von 2,8 und einer Viskosität von 440 mPas bei 25 °C (in der Terminologie dieser Anmeldung **A1b(I)).** |
| Polyol 4: | Polyetherpolyol auf Basis Etylen-/Propylenoxid mit Ethylenoxid-Endblock mit einer Hydroxylzahl von 28 mg KOH/g, einer Funktionalität von 2 und einer Viskosität von 860 mPas bei 20°C (in der Terminologie dieser Anmeldung **A1b(II)).** |
| TEP: | Triethylphosphat, Flammschutzmittel (Lanxess AG). |
| Tegostab B 8461: | Schaumstabilisator (Evonik). |
| Desmorapid DB: | N,N-Dimethylbenzylamin, Katalysator (Lanxess AG). |

(fortgesetzt)

| | |
|---|---|
| Desmorapid 1792: | N,N-Dimethylcyclohexylamin, Katalysator (Bayer MaterialScience AG). |
| c-Pentan: | Cyclopentan, Treibmittel |
| Isocyanat: | Gemisch aus MDI und PMDI mit einem 4,4'-2-Kern-Anteil von ca. 35 Massen-%, einem 2,4'-2-Kern-Anteil von ca. 4 Massen-%, einem 2,2'-2-Kern-Anteil von ca. 0,5 Massen-%, einem 3-Kern-Anteil von ca. 25 Massen-%, sowie mit einem Anteil an höheren Homologen von ca. 35 Massen-%, einem NCO-Wert von ca. 31,5 Massen-% und einer Viskosität von ca. 290 m Pa s bei 20 °C ("Desmodur® 44V20L, BMS AG"). |

Die so erhaltene Isocyanat-reaktive Zusammensetzung wurde mit dem Isocyanat vermischt und in eine Form ausgegossen. Die Mischung selbst wurde mit einem Rührer bei 1000 U/min und 23 °C Rohstofftemperatur hergestellt. Die genauen Rezepturen inklusive der Ergebnisse entsprechender physikalischer Untersuchungen sind in Tabelle 1 zusammengefasst. In **Beispiel 3a** wurde Polyol 1, in **Beispiel 3b** Polyol 2 eingesetzt. Figur 1 zeigt die Steigprofile für beide Schäume. Aufgetragen sind die Fließhöhen (schwarze Quadrate für Beispiel 3a, graue Kreise für Beispiel 3b) und die Steiggeschwindigkeiten (1. Ableitung, gestrichelte Linien; Beispiel 3a in schwarzer Farbe, Beispiel 3b in grauer Farbe) über der Zeit.

Die in Tabelle 1 angegebenen Rohdichten wurden an einem 1000-$cm^3$-Würfel (Kantenlänge 10 cm) durch Bestimmung der entsprechenden Masse ermittelt. Das Fließverhalten zur Beurteilung des Steigprofils der jeweiligen Schäume wurde in einem beheizbaren Steigrohr (Durchmesser = 9,1cm) bei Normaldruck und 35 °C gemessen.

**Tabelle 1: Ergebnisse aus Beispiel 3**

| | | **Beispiel 3a (Vergleich)** | **Beispiel 3b (erfindungsgemäß)** |
|---|---|---|---|
| **Komponente** | **Einheit** | **Wert** | |
| Polyol 1 (100 mol-% primäre OH-Endgruppen) | Gew.-Tle. | 57,0 | 0 |
| Polyol 2 (37 mol-% primäre OH-Endgruppen) | Gew.-Tle. | 0 | 57,0 |
| Polyol 3 | Gew.-Tle. | 13,0 | 13,0 |
| Polyol 4 | Gew.-Tle. | 13,0 | 13,0 |
| TEP | Gew.-Tle. | 15,0 | 15,0 |
| Wasser | Gew.-Tle. | 1,6 | 1,6 |
| Tegostab B8461 | Gew.-Tle. | 2,0 | 2,0 |
| Desmorapid DB | Gew.-Tle. | 0,8 | 0,8 |
| Desmorapid 1792 | Gew.-Tle. | 2,0 | 2,0 |
| c-Pentan | Gew.-Tle. | 13,0 | 13,0 |
| Isocyanat | Gew.-Tle. | 238 | 248 |
| Kennzahl | | 320 | 320 |
| freie Rohdichte | $kg/m^3$ | 32,8 | 33,3 |
| Abbindezeit ("Gelpunkt $t_G$") | s | 118 | 113 |
| Schaumhöhe bei $t_G$ | cm | 62,6 | 55,8 |
| Kernrohdichte | $kg/m^3$ | 62,6 | 61,0 |

(fortgesetzt)

| | | Beispiel 3a (Vergleich) | Beispiel 3b (erfindungsgemäß) |
|---|---|---|---|
| **Komponente** | **Einheit** | **Wert** | |
| Haftfestigkeit*) | $N/mm^2$ | 0,328 | 0,457 |
| *) gemessen an der oberen Deckschicht | | | |

Tabelle 1 zeigt, dass sich der Austausch von Polyol 1 mit 100 Mol-% primären Hydroxyl-Endgruppen gegen Polyol 2 mit lediglich 37 Mol-% primären Hydroxyl-Endgruppen nicht auf die Dichte des unverdichteten PUR-/PIR-Hartschaumes auswirkt. Freie Rohdichten von 33,3 $kg/m^3$ bzw. 32,8 $kg/m^3$ sind im Rahmen der Messgenauigkeit als gleich anzusehen. Jedoch zeigt sich in der geringeren Schaumhöhe am Gelpunkt von Beispiel 3b gegenüber Beispiel 3a ein anderes Fließverhalten der Schaummatrix während des Aufschäumprozesses.

Wie aus Figur 1 ersichtlich, weist die Auftragung der Steiggeschwindigkeit über der Zeit im Fall von Beispiel 3a zwei Maxima auf. Hier wird die Eingangs geschilderte Problematik eines uneinheitlichen Reaktionsprofils besonders deutlich. Zuerst läuft die exotherme Urethan-Bildung (PUR-Reaktion) ab, durch die das Reaktionsgemisch erwärmt wird, erkennbar am ersten Maximum bei ca. 70 Sekunden. Ab einer Temperatur von ca. 65 °C setzt die Trimerisierung der Isocyanate, die sogenannte PIR-Reaktion, ein, erkennbar am zweiten Maximum bei ca. 120 Sekunden.

Beispiel 3b weist dagegen nur ein Maximum der Steiggeschwindigkeit bei ca. 115 Sekunden (mit einer vorgelagerten "Schulter") auf. In diesem Fall ist die Haftfestigkeit mit 0,457 $N/mm^2$ signifikant größer als die von Beispiel 3a mit 0,328 $N/mm^2$. Im Fall von Beispiel 3b ist es durch den Einsatz des erfindungsgemäßen Polyols 2 gelungen, den Ablauf der PUR- und PIR-Reaktionen zu vergleichmäßigen, was sich in einem stetigen Aufbau des Schäumdrucks (erkennbar am Verlauf der Steiggeschwindigkeit) und gleichmäßigem Fließen des Schaums widerspiegelt.

## Patentansprüche

1. Verfahren zur Herstellung eines Polyurethan-Polyisocyanurat-Hartschaums **C** umfassend die Schritte

(I) Umsetzung eines Carboxyl-Endgruppen umfassenden Polyesters mit einem Epoxid der allgemeinen Formel (1),

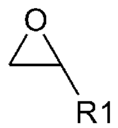
(1),

worin R1 für einen Alkylrest oder einen Arylrest steht,
unter Einhaltung eines molaren Verhältnisses von Epoxidgruppen zu Carboxyl-Endgruppen zwischen 0,8 : 1 und 50 : 1, sodass ein Polyesterpolyol mit sekundären Hydroxyl-Endgruppen **A1a,** welches eine Funktionalität von 1,8 bis 6,5 und eine Hydroxylzahl von 15 mg KOH/g bis 500 mg KOH/g aufweist, erhalten wird;
(II) Verschäumung bei Kennzahlen [berechnet als (Mole Isocyanat-Gruppen / Mole Isocyanat-reaktive Gruppen) • 100] von 180 bis 400,

(i) einer Polyolkomponente **A1** umfassend **A1a**
mit
(ii) einer Isocyanatkomponente **B** umfassend

a) wenigstens ein Isocyanat **B1** ausgewählt aus der Gruppe bestehend aus:

Toluylendiisocyanat, Diphenylmethandiisocyanat, Polyphenylenpolymethylenpolyisocyanat, Xylylendiisocyanat, Naphthylendiisocyanat, Hexamethylendiisocyanat, Diisocyanatodicyclohexylmethan und Isophorondiisocyanat,
oder

b) ein Isocyanat-terminiertes Prepolymer **B2** hergestellt aus wenigstens einem Polyisocyanat **B1** und einer Isocyanat-reaktiven Verbindung,
oder
c) Mischungen aus **B1** und **B2,**

in Gegenwart von
(iii) wenigstens eines Treibmittels **A2** und
(iv) wenigstens eines Katalysators **A3,** wobei carbanionische Katalysatoren ausgeschlossen sind.

**2.** Verfahren nach Anspruch 1, bei dem die Polyolkomponente **A1** zusätzlich zu dem Polyesterpolyol mit sekundären Hydroxyl-Endgruppen **A1a** wenigstens ein aliphatisches Polyetherpolyol **A1b** mit einer Hydroxylzahl zwischen 15 mg KOH/g und 500 mg KOH/g und einer Funktionalität von 1,5 bis 5,5 umfasst.

**3.** Verfahren nach Anspruch 1 oder 2, bei dem der Carboxyl-Endgruppen umfassende Polyester erhalten wird aus der Reaktion von

(i) wenigstens einem Alkohol ausgewählt aus der Gruppe bestehend aus

Ethylenglykol, Diethylenglykol, Polyethylenglykol, 1,2-Propylenglykol, Dipropylenglykol, 1,3-Propandiol, 1,4-Butandiol, 1,6-Hexandiol, 1,8-Octandiol, 1,10-Decandiol, 1,12-Dodecandiol, 2-Methylpropandiol-1,3, Neopentylglykol, 3-Methylpentandiol-1,5, Glycerin, Pentaerythrit und 1,1,1-Trimethylolpropan,

mit
(ii) wenigstens einem Carbonsäureäquivalent ausgewählt aus der Gruppe bestehend aus

Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure und Caprolacton.

**4.** Verfahren nach einem der Ansprüche 1 bis 3, bei dem in der allgemeinen Formel (1) R1

Methyl, Ethyl, n-Propyl, iso-Propyl, n-Butyl, sec-Butyl, iso-Butyl, tert-Butyl, Cyclohexyl oder Phenyl

ist.

**5.** Verfahren nach einem der Ansprüche 1 bis 4, bei die Herstellung des Polyesterpolyols mit sekundären Hydroxyl-Endgruppen **A1a** in Gegenwart wenigstens eines Katalysators durchgeführt wird, der ausgewählt ist aus:

(i) Aminen der allgemeinen Formel (2):

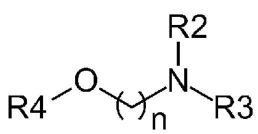
(2)

wobei gilt:

R2 und R3 sind unabhängig voneinander Wasserstoff, Alkyl oder Aryl;
oder
R2 und R3 bilden gemeinsam mit dem sie tragenden N-Atom einen aliphatischen, ungesättigten oder aromatischen Heterozyklus;
n ist eine ganze Zahl von 1 bis 10;
R4 ist Wasserstoff, Alkyl oder Aryl; oder
R4 steht für $-(CH_2)_x-N(R41)(R42)$, wobei gilt:

R41 und R42 sind unabhängig voneinander Wasserstoff, Alkyl oder Aryl; oder
R41 und R42 bilden gemeinsam mit dem sie tragenden N-Atom einen aliphatischen, ungesättigten

oder aromatischen Heterozyklus;

x ist eine ganze Zahl von 1 bis 10;

oder
(ii) Aminen der allgemeinen Formel (3):

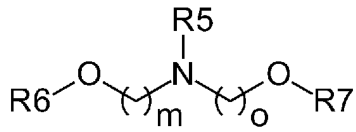 (3)

wobei gilt:

R5 ist Wasserstoff, Alkyl oder Aryl;
R6 und R7 sind unabhängig voneinander Wasserstoff, Alkyl oder Aryl;
m und o sind unabhängig voneinander eine ganze Zahl von 1 bis 10;

oder
(iii) Stickstoffverbindungen ausgewählt aus der Gruppe bestehend aus:

Diazabicyclo[2.2.2]octan, Diazabicyclo[5.4.0]undec-7-en, Dialkylbenzylamin, Dimethylpiperazin, 2,2'-Dimorpholinyldiethylether, Pyridin;

oder
(iv) Mischungen von Katalysatoren aus mindestens zwei Gruppen der Gruppen (i) bis (iii).

**6.** Verfahren nach Anspruch 5, bei dem in der allgemeinen Formel (2)

R2 und R3 Methyl sind, R4 Wasserstoff ist und n = 2 ist, oder
R2 und R3 Methyl sind, R4 $-(CH_2)_2-N(CH_3)_2$ ist und n = 2 ist,

und bei dem in der allgemeinen Formel (3)

R5 Methyl ist, R6 und R7 Wasserstoff sind, m = 2 ist und o = 2 ist.

**7.** Verfahren nach einem der Ansprüche 1 bis 6, bei dem die Herstellung des in Schritt (I) eingesetzten Carboxyl-Endgruppen umfassenden Polyesters die folgenden Schritte umfasst:

(i) Kondensation von wenigstens einem Alkohol ausgewählt aus der Gruppe bestehend aus

Ethylenglykol, Diethylenglykol, Polyethylenglykol, 1,2-Propylenglykol, Dipropylenglykol, 1,3-Propandiol, 1,4-Butandiol, 1,6-Hexandiol, 1,8-Octandiol, 1,10-Decandiol, 1,12-Dodecandiol, 2-Methylpropandiol-1,3, Neopentylglykol, 3-Methylpentandiol-1,5, Glycerin, Pentaerythrit und 1,1,1-Trimethylolpropan,

mit
wenigstens einem Carbonsäureäquivalent ausgewählt aus der Gruppe bestehend aus

Bernsteinsäure, Fumarsäure, Maleinsäure, Maleinsäureanhydrid, Glutarsäure, Adipinsäure, Sebacinsäure, 1,10-Decandicarbonsäure, 1,12-Dodecandicarbonsäure, Phthalsäure, Phthalsäureanhydrid, Isophthalsäure, Terephthalsäure, Pyromellitsäure, Trimellitsäure und Caprolacton,

wobei das molare Verhältnis von Alkohol(en) zu Carbonsäureäquivalent(en) so gewählt wird, dass ein Verfahrensprodukt mit endständigen Alkoholgruppen erhalten wird;
(ii) Umsetzung des in (i) erhaltenen Verfahrensproduktes mit wenigstens einem Carbonsäureanhydrid ausgewählt aus der Gruppe bestehend aus

Phthalsäureanhydrid, Maleinsäureanhydrid, Glutarsäureanhydrid und Bernsteinsäureanhydrid.

**8.** Verfahren nach Anspruch 7, bei dem Schritt (i) bei einer Temperatur T(i) von 150 °C bis 250 °C und Schritt (ii) bei einer Temperatur T(ii) von 120 °C bis 250 °C durchgeführt wird.

**9.** Verfahren nach einem der Ansprüche 1 bis 8, bei dem Schritt (II) in Gegenwart von

(v) wenigstens eines Flammschutzmittels **A4** und
(vi) wenigstens eines Schaumstabilisators **A5**
derart durchgeführt wird, dass zunächst

eine Isocyanat-reaktive Zusammensetzung **A,** umfassend die Komponenten **A1** bis **A5,** durch Vermischen dieser Komponenten in beliebiger Reihenfolge im Massenverhältnis **A : A2** von 2,5 : 1 bis 25 : 1 hergestellt wird, und dann
die Isocyanat-reaktive Zusammensetzung **A** mit der Isocyanatkomponente **B** zum Polyurethan-Polyisocyanurat-Hartschaum **C** verschäumt wird.

**10.** Verfahren nach einem der Ansprüche 1 bis 9, bei dem der Katalysator **A3** ausgewählt ist aus der Gruppe bestehend aus:

Triethylendiamin, N,N-Dimethylcyclohexylamin, Tetramethylendiamin, 1-Methyl-4-dimethylaminoethylpiperazin, Triethylamin, Tributylamin, Dimethylbenzylamin, Dicyclohexylmethylamin , N,N',N"-Tris-(dimethylaminopropyl)hexahydrotriazin, Tris-(dimethylaminopropyl)amin, Tris(dimethylaminomethyl)phenol Dimethylaminopropylformamid, N,N,N',N'-Tetramethylethylendiamin, N,N,N',N'-Tetramethylbutandiamin, Tetramethylhexandiamin, Pentamethyldiethylentriamin, Pentamethyldipropylentriamin, Tetramethyldiaminoethylether, Dimethylpiperazin, 1,2-Dimethylimidazol, 1-Azabicyclo[3.3.0]octan, Bis-(dimethylaminopropyl)- harnstoff N-Methylmorpholin, N-Ethylmorpholin, N-Cyclohexylmorpholin, 2,3-Dimethyl- 3,4,5,6-tetrahydropyrimidin, Triethanolamin, Diethanolamin, Triisopropanolamin, N-Methyldiethanolamin, N-Ethyldiethanolamin, Dimethylethanolamin, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dioctylzinndiacetat, Tris-(N,N-di-methylaminopropyl)-s-hexahydrotriazin, Tetramethylammoniumhydroxid, Natrium-N-[(2-hydroxy-5-nonylphenyl)methyl]-N-methylaminoacetat, Natriumacetat, Natriumoctoat, Kaliumacetat, Kaliumoctoat und Natriumhydroxid,

und bei dem das Treibmittel **A2** ausgewählt ist aus der Gruppe bestehend aus:

Wasser, Cyclopentan, n-Pentan, iso-Pentan, Fluorkohlenwasserstoffe und teilhalogenierte Alkene mit 3 oder 4 Kohlenstoff-Atomen.

**11.** Verfahren nach einem der Ansprüche 1 bis 10, bei dem in der Verschäumung ein Polyesterpolyol **A1a** eingesetzt wird, in dem das molare Verhältnis von primären Hydroxyl-Endgruppen zu sekundären Hydroxyl-Endgruppen zwischen 0 : 1 und 1 : 1 beträgt.

**12.** Polyurethan-Polyisocyanurat-Hartschaumstoff **C,** erhältlich nach einem Verfahren gemäß einem der Ansprüche 1 bis 11.

**13.** Verfahren nach einem der Ansprüche 1 bis 11, bei dem die Verschäumung gegen wenigstens eine Deckschicht **D** unter Bildung eines Verbundelements **E** umfassend den Polyurethan-Polyisocyanurat-Hartschaumstoff **C** und wenigstens eine Deckschicht **D** durchgeführt wird.

**14.** Verfahren nach Anspruch 13, bei dem die Deckschicht **D** aus einem Material besteht, das ausgewählt ist aus der Gruppe bestehend aus:

Beton, Holz, Pressspan, Aluminium, Kupfer, Stahl, Edelstahl und Kunststoff.

**15.** Verbundelement **E,** erhältlich durch ein Verfahren nach einem der Ansprüche 13 oder 14.

## Claims

1. Process for producing a rigid polyurethane-polyisocyanurate foam **C** comprising the steps of

    (I) reacting a polyester comprising carboxyl end groups with an epoxide of general formula (1),

    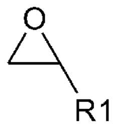
    (1),

    where R1 represents alkyl or aryl,
    by obeying a molar ratio of epoxy groups to carboxyl end groups at between 0.8:1 and 50:1, to obtain a polyester polyol having secondary hydroxyl end groups **A1a** which has a functionality of 1.8 to 6.5, and a hydroxyl number of 15 mg KOH/g to 500 mg KOH/g;
    (II) foaming at isocyanate indexes computed as (moles of isocyanate groups / moles of isocyanate-reactive groups) 100 of 180 to 400,

    (i) a polyol component **A1** comprising **A1a** with
    (ii) an isocyanate component **B** comprising

    a) at least one isocyanate **B1** selected from the group consisting of:

    tolylene diisocyanate, diphenylmethane diisocyanate, polyphenylene polymethylene polyisocyanate, xylylene diisocyanate, naphthylene diisocyanate, hexamethylene diisocyanate, diisocyanatodicyclohexylmethane and isophorone diisocyanate,
    or

    b) an isocyanate-terminated prepolymer **B2** prepared from at least a polyisocyanate **B1** and an isocyanate-reactive compound,
    or
    c) mixtures of **B1** and **B2,**

    in the presence of
    (iii) at least one blowing agent **A2,** and
    (iv) at least one catalyst **A3,** except that carbanionic catalysts shall be excluded.

2. Process according to Claim 1 wherein said polyol component **A1** in addition to said polyester polyol having secondary hydroxyl end groups **A1a** comprises at least one aliphatic polyether polyol **A1b** having a hydroxyl number between 15 mg KOH/g and 500 mg KOH/g and a functionality of 1.5 to 5.5.

3. Process according to Claim 1 or 2 wherein the polyester comprising carboxyl end groups is obtained from the reaction of

    (i) at least one alcohol selected from the group consisting of

    ethylene glycol, diethylene glycol, polyethylene glycol, 1,2-propylene glycol, dipropylene glycol, 1,3-propanediol, 1,4-butanediol, 1,6-hexanediol, 1,8-octanediol, 1,10-decanediol, 1,12-dodecanediol, 2-methyl-1,3-propanediol, neopentyl glycol, 3-methyl-1,5-pentanediol, glycerol, pentaerythritol and 1,1,1-trimethylolpropane,

    with
    (ii) at least one carboxylic acid equivalent selected from the group consisting of

    succinic acid, fumaric acid, maleic acid, maleic anhydride, glutaric acid, adipic acid, sebacic acid, 1,10-decanedicarboxylic acid, 1,12-dodecanedicarboxylic acid, phthalic acid, phthalic anhydride, isophthalic acid, terephthalic acid, pyromellitic acid, trimellitic acid and caprolactone.

**4.** Process according to any of Claims 1 to 3 wherein R1 in general formula (1) is methyl, ethyl, n-propyl, isopropyl, n-butyl, sec-butyl, isobutyl, tert-butyl, cyclohexyl or phenyl.

**5.** Process according to any of Claims 1 to 4 wherein said polyester polyol having secondary hydroxyl end groups **A1a** is prepared in the presence of at least one catalyst selected from:

(i) amines of general formula (2):

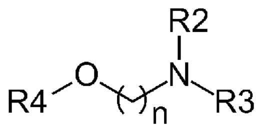 (2)

where

R2 and R3 are each independently hydrogen, alkyl or aryl;
or
R2 and R3 combine with the nitrogen atom bearing them to form an aliphatic, unsaturated or aromatic heterocycle;
n is an integer from 1 to 10;
R4 is hydrogen, alkyl or aryl; or
R4 represents $-(CH_2)_x-N(R41)(R42)$, where:

R41 and R42 are each independently hydrogen, alkyl or aryl; or
R41 and R42 combine with the nitrogen atom bearing them to form an aliphatic, unsaturated or aromatic heterocycle;

x is an integer from 1 to 10;

or
(ii) amines of general formula (3):

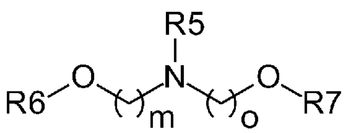 (3)

where

R5 is hydrogen, alkyl or aryl;
R6 and R7 are each independently hydrogen, alkyl or aryl;
m and ○ are each independently an integer from 1 to 10;

or
(iii) nitrogen compounds selected from the group consisting of:

diazabicyclo[2.2.2]octane, diazabicyclo[5.4.0]undec-7-ene, dialkylbenzylamine, dimethylpiperazine, 2,2'-dimorpholinyldiethyl ether, pyridine;

or
(iv) mixtures of catalysts from two or more of groups (i) to (iii).

**6.** Process according to Claim 5 wherein in general formula (2)

R2 and R3 are each methyl, R4 is hydrogen and n is = 2, or
R2 and R3 are each methyl, R4 is $-(CH_2)_2-N(CH_3)$ and n is = 2,

and wherein in general formula (3)

R5 is methyl, R6 and R7 are each hydrogen, m is = 2 and ○ is = 2.

**7.** Process according to any of Claims 1 to 6 wherein the preparation of the polyester comprising carboxyl end groups which is used in step (I) comprises the steps of:

(i) condensing at least one alcohol selected from the group consisting of

ethylene glycol, diethylene glycol, polyethylene glycol, 1,2-propylene glycol, dipropylene glycol, 1,3-propanediol, 1,4-butanediol, 1,6-hexanediol, 1,8-octanediol, 1,10-decanediol, 1,12-dodecanediol, 2-methyl-1,3-propanediol, neopentyl glycol, 3-methyl-1,5-pentanediol, glycerol, pentaerythritol and 1,1,1-trimethylolpropane,

with
at least one carboxylic acid equivalent selected from the group consisting of

succinic acid, fumaric acid, maleic acid, maleic anhydride, glutaric acid, adipic acid, sebacic acid, 1,10-decanedicarboxylic acid, 1,12-dodecanedicarboxylic acid, phthalic acid, phthalic anhydride, isophthalic acid, terephthalic acid, pyromellitic acid, trimellitic acid and caprolactone,

while choosing the molar ratio of alcohol(s) to carboxylic acid equivalent(s) such that a process product having terminal alcohol groups is obtained;
(ii) reacting the process product obtained in (i) with at least one carboxylic anhydride selected from the group consisting of

phthalic anhydride, maleic anhydride, glutaric anhydride and succinic anhydride.

**8.** Process according to Claim 7 wherein step (i) is carried out at a temperature T(i) of 150°C to 250°C and step (ii) is carried out at a temperature T(ii) of 120°C to 250°C.

**9.** Process according to any of Claims 1 to 8 wherein step (II) is carried out in the presence of

(v) at least one flame retardant **A4,** and
(vi) at least one foam stabilizer **A5**,
by first

preparing an isocyanate-reactive composition **A** comprising said components **A1** to **A5** by mixing said components in any desired order in an **A:A2** mass ratio of 2.5:1 to 25:1, and then
foaming up said isocyanate-reactive composition **A** with said isocyanate component **B** to form said rigid polyurethane-polyisocyanurate foam **C.**

**10.** Process according to any of Claims 1 to 9 wherein said catalyst **A3** is selected from the group consisting of:

triethylenediamine, N,N-dimethylcyclohexylamine, tetramethylenediamine, 1-methyl-4-dimethylaminoethylpiperazine, triethylamine, tributylamine, dimethylbenzylamine, dicyclohexylmethylamine, N,N',N''-tris(dimethylaminopropyl)hexahydrotriazine, tris(dimethylaminopropyl)amine, tris(dimethylaminomethyl)phenol, dimethylaminopropylformamide, N,N,N',N'-tetramethylethylenediamine, N,N,N',N'-tetramethylbutanediamine, tetramethyl-hexanediamine, pentamethyldiethylenetriamine, pentamethyldipropylenetriamine, tetramethyldiaminoethyl ether, dimethylpiperazine, 1,2-dimethylimidazole, 1-azabicyclo[3.3.0]octane, bis(dimethylaminopropyl)urea, N-methylmorpholine, N-ethylmorpholine, N-cyclohexylmorpholine, 2,3-dimethyl-3,4,5,6-tetrahydropyrimidine, triethanolamine, diethanolamine, triisopropanolamine, N-methyldiethanolamine, N-ethyldiethanolamine, dimethylethanolamine, tin(II) acetate, tin(II) octoate, tin(II) ethylhexoate, tin(II) laurate, dibutyltin diacetate, dibutyltin dilaurate, dibutyltin maleate, dioctyltin diacetate, tris(N,N-dimethylaminopropyl)-s-hexahydrotriazine, tetramethylammonium hydroxide, sodium N-[(2-hydroxy-5-nonylphenyl)methyl]-N-methylaminoacetate, sodium acetate, sodium octoate, potassium acetate, potassium octoate and sodium hydroxide,

and wherein said blowing agent **A2** is selected from the group consisting of:

water, cyclopentane, n-pentane, isopentane, hydrofluorocarbons and partially halogenated alkenes having 3 or 4 carbon atoms.

**11.** Process according to any of Claims 1 to 10 wherein the foaming step utilizes a polyester polyol **A1a** in which the molar ratio of primary hydroxyl end groups to secondary hydroxyl end groups is between 0:1 and 1:1.

**12.** Rigid polyurethane-polyisocyanurate foam **C** obtainable by a process according to any of Claims 1 to 11.

**13.** Process according to any of Claims 1 to 11 wherein the foaming is carried out against at least one covering layer **D** to form a composite element **E** comprising said rigid polyurethane-polyisocyanurate foam **C** and at least one covering layer **D.**

**14.** Process according to Claim 13 wherein said covering layer **D** consists of a material selected from the group consisting of:

concrete, wood, pressboard, aluminum, copper, steel, stainless steel and plastic.

**15.** Composite element **E** obtainable by a process according to either of Claims 13 and 14.

## Revendications

**1.** Procédé de fabrication d'une mousse dure de polyuréthane-polyisocyanurate C comprenant les étapes suivantes :

(I) la mise en réaction d'un polyester comprenant des groupes terminaux carboxyle avec un époxyde de formule générale (1)

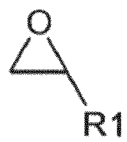

(1)

dans laquelle R1 représente un radical alkyle ou un radical aryle,
en maintenant un rapport molaire entre les groupes époxyde et les groupes terminaux carboxyle compris entre 0,8:1 et 50:1, de manière à obtenir un polyester-polyol contenant des groupes terminaux hydroxyle secondaires A1a, qui présente une fonctionnalité de 1,8 à 6,5 et un indice hydroxyle de 15 mg KOH/g à 500 mg KOH/g ;
(II) le moussage à des indices [calculés en tant que (moles de groupes isocyanate/moles de groupes réactifs avec les isocyanates)·100] de 180 à 400,

(i) d'un composant polyol A1 comprenant A1a
avec
(ii) un composant isocyanate B comprenant

a) au moins un isocyanate B1 choisi dans le groupe constitué par :

le diisocyanate de toluylène, le diisocyanate de diphénylméthane, le polyisocyanate de polyphénylène-polyméthylène, le diisocyanate de xylylène, le diisocyanate de naphtylène, le diisocyanate d'hexaméthylène, le diisocyanatodicyclohexylméthane et le diisocyanate d'isophorone,
ou

b) un prépolymère à terminaison isocyanate B2 fabriqué à partir d'au moins un polyisocyanate B1 et un composé réactif avec les isocyanates,

ou
c) des mélanges de B1 et B2,
en présence de

(iii) au moins un agent gonflant A2 et
(iv) au moins un catalyseur A3, les catalyseurs carbanioniques étant exclus.

**2.** Procédé selon la revendication 1, selon lequel le composant polyol A1 comprend en plus du polyester-polyol contenant des groupes terminaux hydroxyle secondaire A1a au moins un polyéther-polyol aliphatique A1b ayant un indice hydroxyle compris entre 15 mg KOH/g et 500 mg KOH/g et une fonctionnalité de 1,5 à 5,5.

**3.** Procédé selon la revendication 1 ou 2, selon lequel le polyester comprenant des groupes terminaux carboxyle est obtenu par la réaction de

(i) au moins un alcool choisi dans le groupe constitué par :

l'éthylène glycol, le diéthylène glycol, le polyéthylène glycol, le 1,2-propylène glycol, le dipropylène glycol, le 1,3-propanediol, le 1,4-butanediol, le 1,6-hexanediol, le 1,8-octanediol, le 1,10-décanediol, le 1,12-dodécanediol, le 2-méthylpropanediol-1,3, le néopentylglycol, le 3-méthylpentanediol-1,5, la glycérine, la pentaérythrite et le 1,1,1-triméthylolpropane,
avec

(ii) au moins un équivalent d'acide carboxylique choisi dans le groupe constitué par :

l'acide succinique, l'acide fumarique, l'acide maléique, l'anhydride de l'acide maléique, l'acide glutarique, l'acide adipique, l'acide sébacique, l'acide 1,10-décanedicarboxylique, l'acide 1,12-dodécanedicarboxylique, l'acide phtalique, l'anhydride de l'acide phtalique, l'acide isophtalique, l'acide téréphtalique, l'acide pyromellitique, l'acide trimellitique et la caprolactone.

**4.** Procédé selon l'une quelconque des revendications 1 à 3, selon lequel, dans la formule générale (1), R1 représente méthyle, éthyle, n-propyle, isopropyle, n-butyle, sec-butyle, iso-butyle, tert-butyle, cyclohexyle ou phényle.

**5.** Procédé selon l'une quelconque des revendications 1 à 4, selon lequel la fabrication du polyester-polyol contenant des groupes terminaux hydroxyle secondaires A1a est réalisée en présence d'au moins un catalyseur, qui est choisi parmi :

(i) les amines de formule générale (2)

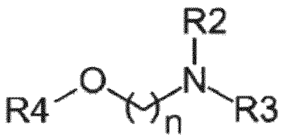 (2)

dans laquelle :

R2 et R3 représentent indépendamment l'un de l'autre hydrogène, alkyle ou aryle ;
ou
R2 et R3 forment ensemble avec l'atome N qui les porte un hétérocycle aliphatique, insaturé ou aromatique ;
n représente un nombre entier de 1 à 10 ;
R4 représente hydrogène, alkyle ou aryle ; ou
R4 représente $-(CH_2)_x-N(R41)(R42)$,
R41 et R42 représentant indépendamment l'un de l'autre hydrogène, alkyle ou aryle ; ou
R41 et R42 formant ensemble avec l'atome N qui les porte un hétérocycle aliphatique, insaturé ou aromatique ;
x représente un nombre entier de 1 à 10 ;
ou

(ii) les amines de formule générale (3) :

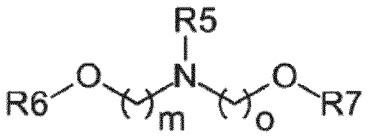
(3)

dans laquelle :

R5 représente hydrogène, alkyle ou aryle ;
R6 et R7 représentent indépendamment l'un de l'autre hydrogène, alkyle ou aryle ;
m et ○ représentent indépendamment l'un de l'autre un nombre entier de 1 à 10 ;
ou

(iii) les composés azotés choisis dans le groupe constitué par :

le diazabicyclo[2.2.2]octane, le diazabicyclo[5.4.0]undéc-7-ène, la dialkylbenzylamine, la diméthylpipérazine, l'éther 2,2'-dimorpholinyldiéthylique, la pyridine ;
ou

(iv) les mélanges de catalyseurs d'au moins deux des groupes (i) à (iii).

**6.** Procédé selon la revendication 5, selon lequel, dans la formule générale (2),
R2 et R3 représentent méthyle, R4 représente hydrogène et n = 2, ou
R2 et R3 représentent méthyle, R4 représente $-(CH_2)_2-N(CH_3)_2$ et n = 2,
et selon lequel, dans la formule générale (3),
R5 représente méthyle, R6 et R7 représentent hydrogène, m = 2 et ○ = 2.

**7.** Procédé selon l'une quelconque des revendications 1 à 6, selon lequel la fabrication du polyester comprenant des groupes terminaux carboxyle utilisé à l'étape (I) comprend les étapes suivantes :

(i) la condensation d'au moins un alcool choisi dans le groupe constitué par
l'éthylène glycol, le diéthylène glycol, le polyéthylène glycol, le 1,2-propylène glycol, le dipropylène glycol, le 1,3-propanediol, le 1,4-butanediol, le 1,6-hexanediol, le 1,8-octanediol, le 1,10-décanediol, le 1,12-dodécanediol, le 2-méthylpropanediol-1,3, le néopentylglycol, le 3-méthylpentanediol-1,5, la glycérine, la pentaérythrite et le 1,1,1-triméthylolpropane,
avec
au moins un équivalent d'acide carboxylique choisi dans le groupe constitué par
l'acide succinique, l'acide fumarique, l'acide maléique, l'anhydride de l'acide maléique, l'acide glutarique, l'acide adipique, l'acide sébacique, l'acide 1,10-décanedicarboxylique, l'acide 1,12-dodécanedicarboxylique, l'acide phtalique, l'anhydride de l'acide phtalique, l'acide isophtalique, l'acide téréphtalique, l'acide pyromellitique, l'acide trimellitique et la caprolactone,
le rapport molaire entre le ou les alcools et le ou les équivalents d'acides carboxyliques étant choisi de manière à obtenir un produit de procédé contenant des groupes alcool terminaux ;
(ii) la mise en réaction du produit de procédé obtenu à l'étape (i) avec au moins un anhydride d'acide carboxylique choisi dans le groupe constitué par l'anhydride de l'acide phtalique, l'anhydride de l'acide maléique, l'anhydride de l'acide glutarique et l'anhydride de l'acide succinique.

**8.** Procédé selon la revendication 7, selon lequel l'étape (i) est réalisée à une température T(i) de 150 °C à 250 °C et l'étape (ii) à une température T(ii) de 120 °C à 250 °C.

**9.** Procédé selon l'une quelconque des revendications 1 à 8, selon lequel l'étape (II) est réalisée en présence de

(v) au moins un agent ignifuge A4 et
(vi) au moins un stabilisateur de mousse A5 de manière à fabriquer tout d'abord
une composition réactive avec les isocyanates A, comprenant les composants A1 à A5, par mélange de ces

composants dans un ordre quelconque en un rapport en masse A:A2 de 2,5:1 à 25:1, puis
à faire mousser la composition réactive avec les isocyanates A avec le composant isocyanate B pour obtenir la mousse dure de polyuréthane-polyisocyanurate C.

**10.** Procédé selon l'une quelconque des revendications 1 à 9, selon lequel le catalyseur A3 est choisi dans le groupe constitué par :

la triéthylène-diamine, la N,N-diméthylcyclohexylamine, la tétraméthylène-diamine, la 1-méthyl-4-diméthylaminoéthylpipérazine, la triéthylamine, la tributylamine, la diméthylbenzylamine, la dicyclohexylméthylamine, la N,N',N''-tris-(diméthylaminopropyl)hexahydrotriazine, la tris-(diméthylaminopropyl)amine, le tris(diméthylaminométhyl)phénol, le diméthyl-aminopropylformamide, la N,N,N',N'-tétraméthyléthylènediamine, la N,N,N',N'-tétra-méthylbutanediamine, la tétraméthylhexanediamine, la pentaméthyldiéthylène-triamine, la pentaméthyldipropylène-triamine, l'éther tétraméthyldiaminoéthylique, la diméthylpipérazine, le 1,2-diméthylimidazole, le 1-azabicyclo[3.3.0]octane, la bis-(diméthylaminopropyl)-urée, la N-méthylmorpholine, la N-éthylmorpholine, la N-cyclohexylmorpholine, la 2,3-diméthyl-3,4,5,6-tétrahydropyrimidine, la triéthanolamine, la diéthanolamine, la triisopropanolamine, la N-méthyldiéthanolamine, la N-éthyldiéthanolamine, la diméthyléthanolamine, l'acétate d'étain (II), l'octoate d'étain (II), l'éthylhexoate d'étain (II), le laurate d'étain (II), le diacétate de dibutylétain le dilaurate de dibutylétain, le maléate de dibutylétain, le diacétate de dioctylétain, la tris-(N,N-di-méthylaminopropyl)-s-hexahydrotriazine,
l'hydroxyde de tétraméthyl-ammonium, le N-[(2-hydroxy-5-nonylphényl)méthyl]-N-méthylaminoacétate de sodium, l'acétate de sodium, l'octoate de sodium, l'acétate de potassium, l'octoate de potassium et l'hydroxyde de sodium,
et selon lequel l'agent gonflant A2 est choisi dans le groupe constitué par :

l'eau, le cyclopentane, le n-pentane, l'isopentane, les hydrocarbures fluorés et les alcènes partiellement halogénés contenant 3 ou 4 atomes de carbone.

**11.** Procédé selon l'une quelconque des revendications 1 à 10, selon lequel un polyester-polyol A1a est utilisé lors du moussage, dans lequel le rapport molaire entre les groupes terminaux hydroxyle primaires et les groupes terminaux hydroxyle secondaires est compris entre 0:1 et 1:1.

**12.** Mousse dure de polyuréthane-polyisocyanurate C, pouvant être obtenue par un procédé selon l'une quelconque des revendications 1 à 11.

**13.** Procédé selon l'une quelconque des revendications 1 à 11, selon lequel le moussage est réalisé contre au moins une couche supérieure D pour former un élément composite E comprenant la mousse dure de polyuréthane-polyisocyanurate C et au moins une couche supérieure D.

**14.** Procédé selon la revendication 13, selon lequel la couche supérieure D est constituée d'un matériau qui est choisi dans le groupe constitué par :

le béton, le bois, l'aggloméré, l'aluminium, le cuivre, l'acier, l'acier inoxydable et le plastique.

**15.** Élément composite E, pouvant être obtenu par un procédé selon l'une quelconque des revendications 13 ou 14.

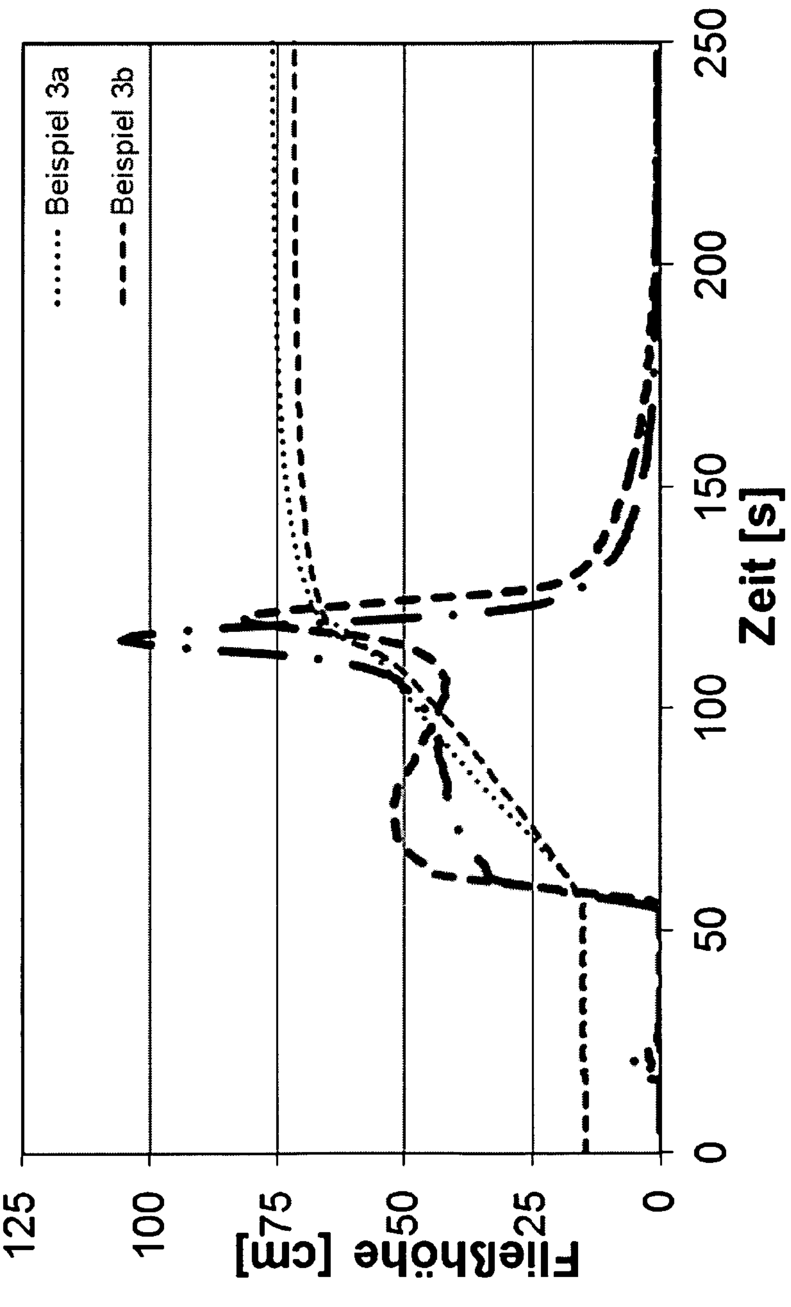
Fließhöhe [cm]
125
100
75
50
25
0
Zeit [s]
0
50
100
150
200
250
Beispiel 3a
Beispiel 3b

Figur 1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1878493 A1
- WO 2010127823 A2
- WO 2011000546 A1
- GB 1108013 A
- US 4647595 A
- EP 0086309 A1
- EP 2046861 A
- US 2764565 A


### In der Beschreibung aufgeführte Nicht-Patentliteratur


- Kunststoff-Handbuch. Carl Hanser Verlag, 1993, vol. VII, 267-354
- Polyurethan Taschenbuch. Carl Hanser Verlag, 2001, 83-102